(19) Europäisches Patentamt / European Patent Office / Office européen des brevets

(11) **EP 3 504 273 B1**

(12) **EUROPEAN PATENT SPECIFICATION**


(45) Date of publication and mention of the grant of the patent:
**05.07.2023 Bulletin 2023/27**

(21) Application number: **17758295.4**

(22) Date of filing: **28.07.2017**

(51) International Patent Classification (IPC):
***C08L 69/00*** *(2006.01)*

(52) Cooperative Patent Classification (CPC):
(C-Sets available)
**C08L 69/00** (Cont.)

(86) International application number:
**PCT/IB2017/054624**

(87) International publication number:
**WO 2018/037300 (01.03.2018 Gazette 2018/09)**


(54) **AUTOMOTIVE ARTICLES INCLUDING POLYCARBONATE-POLYCARBONATE/POLYSILOXANE COMPOSITIONS HAVING HIGH FLOW, HIGH IMPACT, AND GOOD RELEASE PROPERTIES**

KFZ-ARTIKEL MIT POLYCARBONAT-POLYCARBONAT/ZUSAMMENSETZUNGEN MIT HOHEM FLUSS UND HOHER SCHLAGFESTIGKEIT UND HOHER TRENNEIGENSCHAFTEN

PIÈCES AUTOMOBILES COMPRENANT DES COMPOSITIONS DE POLYCARBONATE-POLYCARBONATE/POLYSILOXANE AYANT UNE FLUIDITÉ ÉLEVÉE, UNE RÉSISTANCE ÉLEVÉE AUX CHOCS ET UNE BONNE APTITUDE AU DÉCOLLAGE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2016 EP 16382403**

(43) Date of publication of application:
**03.07.2019 Bulletin 2019/27**



(73) Proprietor: **SHPP Global Technologies B.V.**
**4612 PX Bergen op Zoom (NL)**

(72) Inventors:
- **MARTINEZ CANOVAS, Maria Dolores**
  **30009 Murcia (ES)**
- **VAN DER MEE, Mark Adrianus Johannes**
  **4811 VM Breda (NL)**
- **VAN DE GRAMPEL, Robert Dirk**
  **4691 DK Tholen (NL)**
- **BRUSS, Erhard**
  **53424 Remagen (DE)**
- **BOONMAN, Rob**
  **4906 EN Oosterhout (NL)**

(74) Representative: **Modiano, Micaela Nadia et al**
**Modiano & Partners**
**Thierschstrasse 11**
**80538 München (DE)**



(56) References cited:
**WO-A1-2008/100327**
**WO-A1-2014/152107**
**WO-A1-2014/191973**
**US-A1- 2013 309 474**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 504 273 B1

(52) Cooperative Patent Classification (CPC): (Cont.)

C-Sets
**C08L 69/00, C08K 5/103, C08L 83/10**

## Description

TECHNICAL FIELD

The present disclosure pertains to polycarbonate compositions designed to have high flow, high impact, good aesthetics and good release properties.

BACKGROUND

WO2014191973A1 discloses methods and polycarbonate blend compositions with improved appearance characteristics and impact characteristics. The resulting compositions, comprising a polycarbonate polymer, a first polysiloxane-polycarbonate copolymer, a second polysiloxane-polycarbonate copolymer, and optionally a color composition, can be used in the manufacture of articles while still retaining advantageous mechanical properties, melt flow properties, and appearance characteristics such as the ability to achieve deep black and bright white colors.
US2013309474A1 discloses a composition which includes at least one poly(aliphatic ester)-polycarbonate copolymer, a polysiloxane-polycarbonate copolymer, and an electromagnetic shielding agent (such as metal fibers). The composition exhibits excellent impact properties and electromagnetic shielding properties when formed into an article. Another composition includes at least one poly(aliphatic ester)-polycarbonate copolymer, a polysiloxane-polycarbonate copolymer, and carbon fibers. This composition has excellent impact properties when formed into an article.
Trends in plastic part design are driving toward more thin, more complex parts with advanced styling. Materials with good flow and sufficient release are required to achieve such a narrow and complex structure with enhanced styling, while also maintaining high impact performance.
These and other shortcomings are addressed by aspects of the present disclosure.

SUMMARY OF THE INVENTION

The instant invention concerns automotive articles including a thermoplastic composition including: (a) from 49.5 wt % to 97.95 wt % of at least one homopolycarbonate polymer; (b) from 2.0 wt % to 49.5 wt % of at least one poly(carbonate-siloxane) copolymer in an amount effective to provide a total siloxane content of 1.0 wt% to 5.0 wt% based on the total weight of the thermoplastic composition; and (c) from 0.05 wt % to 1.0 wt % of at least one release agent, wherein the thermoplastic composition exhibits a melt volume flow rate (MVR) of at least 25 cubic centimeters per 10 minutes ($cm^3$/10 min), as determined according to ISO 1133 at 300 degrees Celsius (°C) using a 1.2 kilogram (kg) load; a ductile/brittle transition temperature of less than or equal to 10 °C as determined in accordance with ISO 180-1A on a molded part having a thickness of 3 millimeter (mm); and an L* that is less than 30% higher compared to a reference blend without the poly(carbonate-siloxane) copolymer, as measured according to ASTM D1729 on a 3 mm thick metallized plaque in reflectance and specular excluded mode.
The instant invention also concerns automotive articles including a thermoplastic composition including: (a) from 49.5 wt % to 97.95 wt % of at least one homopolycarbonate polymer; (b) from 2.0 wt % to 49.5 wt % of at least one poly(carbonate-siloxane) copolymer in an amount effective to provide a total siloxane content of 1.0 wt% to 5.0 wt% based on the total weight of the thermoplastic composition; and (c) from 0.05 wt % to 1.0 wt % of at least one release agent, wherein the thermoplastic composition exhibits a melt volume flow rate (MVR) of at least 25 $cm^3$/10 min, as determined according to ISO 1133 at 300°C using a 1.2 kg load; a ductile/brittle transition temperature of less than or equal to 10 °C as determined in accordance with ISO 180-1A on a molded part having a thickness of 3 mm and an L* that is less than 10, as measured according to ASTM D1729 on a 3 mm thick metallized plaque in reflectance and specular excluded mode.
The instant invention also concerns a method of forming an automotive article including a thermoplastic composition. The method includes forming a thermoplastic composition; and injection molding, extruding, rotational molding, blow molding or thermoforming the thermoplastic composition in a mold to form the article. The thermoplastic composition includes: (a) from 49.5 wt % to 97.95 wt % of at least one homopolycarbonate polymer; (b) from 2 wt % to 49.5 wt % of at least one poly(carbonate-siloxane) copolymer in an amount effective to provide a total siloxane content of 1.0 wt% to 5 wt% based on the total weight of the thermoplastic composition; and (c) from 0.05 wt % to 1.0 wt % of at least one release agent. The thermoplastic composition exhibits a MVR of at least 25 $cm^3$/10 min, as determined according to ISO 1133 at 300°C using a 1.2 kg load, a ductile/brittle transition temperature of less than or equal to 10 °C as determined in accordance with ISO 180-1A on a molded part having a thickness of 3 mm, and an L* that is less than 30% higher compared to a reference blend without the poly(carbonate-siloxane) copolymer, as measured according to ASTM D1729 on a 3 mm thick metallized plaque in reflectance and specular excluded mode.
Such compositions and methods may be used to form articles including, but not limited to automotive bezels and reflectors.

BRIEF DESCRIPTION OF THE DRAWINGS

FIG. 1 shows applications for bezels, reflectors housings or box shapes which require high aesthetic gloss surfaces-parts which can normally only be molded by applying strictly the plastic design rules.

FIGS. 2 and 3 illustrate the unique combination of high flow and improved release characteristic that enables box, reflectors, housing or bezel designs with lower draft angles and larger ribs due to more rectangular walls with minimum release angle.

FIG. 4 illustrates how increased draft angle increases part dimension.

FIG. 5 shows an exemplary apparatus used for determining mold release force. The units 40, 30 and 20 are in millimeter (mm).

FIG. 6 shows an exemplary apparatus used for determining coefficient of friction.

DETAILED DESCRIPTION OF ILLUSTRATIVE EMBODIMENTS

For some applications in the market that require low temperature impact performance, blends of polycarbonate/polysiloxanes are used because compositions including these blends may have high impact and good aesthetics in addition to very good release properties compared with normal polycarbonate. Current commercial products are based on a blend of polycarbonate and a polysiloxane copolymer in different ratios; depending on these ratios, the properties of the final product, such as release performance, can vary.

It has been surprisingly found that blends including (i) a polycarbonate-siloxane copolymer in an amount effective to provide a total siloxane content of 1.0 wt% to 5.0 wt% based on the total weight of the blend and (ii) at least one polycarbonate have an improved balance of high flow, high impact at room temperature and lower temperatures, and good aesthetics after metallization of a molded part, compared to substantially similar compositions without the polycarbonate-siloxane or polycarbonates with alternative impact modifiers, such as acrylic or silicone based core-shell rubbers.

**Thermoplastic Compositions**

The disclosed thermoplastic compositions can exhibit, for example, improved mechanical, or impact, thermal, or flow and release, and/or morphological, or stylistic properties, without adversely affecting other mechanical and thermal properties.

In making plastic parts, materials are generally fed into the heated barrel of an injection molding machine, melted, and then injected under high pressure into a mold cavity. After this melt cools, a plastic component is realized. The process of cooling shrinks the melt on the mold core, necessitating an ejection force to demold the component from the mold of the machine.

In the ejection stage of injection molding the parts are mechanically forced to separate from the molding surfaces (especially from the cores). If the force required to remove the mold is too high (e.g., due to the strength with which the plastic sticks to the mold core), the machine's ejector pins may punch through and damage the plastic component. Ideally, the molded part should slip down easily from the mold core. The friction coefficient refers to the sticking or adhesive force that exists between the plastic part and the metal surface of the mold. Reduce this force, and demolding will be more efficient. Friction is normally understood as the resistance offered by bodies in contact to relative motion. In injection molding, the bodies in contact are steel molding surfaces and polymer moldings.

Aesthetics and functionality of products may require the use of small draft angles. Small draft angles, however, lead to an increase of the ejection forces.

In polymer injection molding, adhesion force(s) between part and the tool are a complex interaction due to the dependency of part geometry and process parameters such as temperature and pressure. Ejection force, also called release force, has been identified in literature as a total friction between the tool and the polymer interface.

Holding pressure and surface temperature may influence the ejection force.

It is known that very good, polished, mirror-like surfaces can be difficult to separate by the local formation of vacuum. The testing of demolding, particularly for those developing raw materials, has focused on speeding up cycle times and reducing the amount of release agents used in the thermoplastic. The typical percentage of a release agent in the melt is 1.0%, or even 0.5%. If this amount of release agent can be reduced to 0.2%, a reduction of problems

observed in the molding process that relate to high contents of release agents can be avoided.

A high gloss surface needs more draft than rough surfaces. For example, currently automotive bezels include a variety of materials, depending on the part design and the heat requirements, including polycarbonate (PC), Polybutylene terephthalate (PBT), high heat PC, polyethersulfones and polyetherimide. Amongst polycarbonates, typical market solutions for bezels include use of PC having a melt flow volume rate (MVR) of 8 up to 35 $cm^3$/10 min as tested according to ISO 1133 at 300°C using a 1.2 kg load. Such polycarbonates are available from Covestro and SABIC. PC resins with an MVR of greater than 35 $cm^3$/10 min are not currently used because the low Mw results in brittleness and consequently to de-molding failures or in-use part failures.

Friction between the thermoplastic part and the injection mold core not only depends on the mechanical relationship between the two surfaces, but also on an adhesive component inherent in the properties of the two materials at processing conditions. While the deformation (or mechanical) component of friction tends to be more easily defined, the adhesion component is rather more complex.

For polymers, the surface forces consist of van der Waals, coulombic and possibly hydrogen bonding forces. The higher the surface free energy of the polymer, the greater the adhesive force.

Equations developed for the ejection force for deep injection molded parts derive from the friction-based concept FR= f $\times$ pA $\times$ A, where FR is the ejection (or release) force, f is the coefficient of friction between the mold and the part, pA is the contact pressure of the part against the mold core, and A is the area of contact.

Contact pressure can be defined as p = E(T) $\times$ $\Delta$dr $\times$ sm, and therefore ejection force is: FR = Cf $\times$ E(T) $\Delta$dr $\times$ sm $\times$ 2$\pi$L, where E(T) is the modulus of the thermoplastic part material at ejection temperature, $\Delta$dr is the relative change in diameter of the part immediately after ejection, sm, is the thickness of the part, and L is the length of the part in contact with the mold core.

Statistical analyses for demolding forces are used to determine the effects of packing time, cooling time and packing pressure on ejection force for materials or grade combinations. One common analysis is to do injection molding of sleeves, then measure the ejection force necessary to remove the sleeve from the core. At the opening of the mold, the part remains on the core due to the material contraction. At the end of the opening stroke, the ejector pins detach the part from the core. The force applied to the part for demolding is registered as the Mold Release Force (FR).

The friction properties of pairs of materials are usually represented by the coefficient of friction. The coefficient of friction is defined (e.g. in ASTM G40 test standard) as: $\mu$ = F / N In which, F is friction force and N is normal contact force. The same standard defines a coefficient of static friction, $\mu$s, corresponding to the maximum force that must be overcome to initiate macroscopic motion between the two bodies. A coefficient of kinetic friction is obtained from the average friction force necessary to maintain the macroscopic relative motion between the two bodies. It is represented by $\mu$k.

Plastic tends to stick over the surface of the cores. For example, the sidewalls that are perpendicular to the mold's parting line must be drafted. Draft angles increase the shape dimensions. Other areas that require draft angles include mounting flanges, gussets, holes, hollow bosses, louvers, other holes or ribs. As a result, dimensions like rib height are limited, and the wall thickness rib ratio is correlated to the draft angle. The plastic design rules define the shape of: a hole, a core, the rib height, the height of a side wall or the wall thickness rib ratio.

Mold drafts facilitate part removal from the mold. The draft is generally in an offset angle that is parallel to the mold opening and closing. The ideal draft angle for a given part depends on the depth of the part in the mold and its required end-use function. The mold part line will need to be located in a way that splits the draft in order to minimize it. If no draft is acceptable due to design /styling considerations, a side action mold (side slider) may be required in some aspects.

As a result, designers typically design parts according to the general plastic rules to ensure good manufacturing performance and aesthetics of the part.

Polycarbonate Polymer

The terms "polycarbonate" or "polycarbonates" as used herein include copolycarbonates, homopolycarbonates, (co)polyester carbonates and combinations thereof.

The term polycarbonate can be further defined as compositions have repeating structural units of the formula (1):

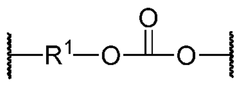
(1),

in which at least 60 percent of the total number of R1 groups are aromatic organic radicals and the balance thereof are aliphatic, alicyclic, or aromatic radicals. In a further aspect, each R1 is an aromatic organic radical and, in particular, a radical of the formula (2):

-A1-Y1-A2- (2),

wherein each of A1 and A2 is a monocyclic divalent aryl radical and Y1 is a bridging radical having one or two atoms that separate A1 from A2. In various aspects, one atom separates A1 from A2. For example, radicals of this type include, but are not limited to, radicals such as -O-, -S-, -S(O)-, -S(O2)-, -C(O)-, methylene, cyclohexyl-methylene, 2-[2.2.1] -bicycloheptylidene, ethylidene, isopropylidene, neopentylidene, cyclohexylidene, cyclopentadecylidene, cyclododecylidene, and adamantylidene. The bridging radical Y1 may be a hydrocarbon group or a saturated hydrocarbon group such as methylene, cyclohexylidene, or isopropylidene.

Polycarbonate materials include materials disclosed and described in U.S. Patent No. 7,786,246, disclosing various polycarbonate compositions and methods for manufacture of same. Polycarbonate polymers can be manufactured by means known to those skilled in the art.

Some polycarbonates are linear bisphenol-A polycarbonates produced by melt polymerization. The melt polycarbonate process is based on continuous reaction of a dihydroxy compound and a carbonate source in a molten stage. The reaction can occur in a series of reactors where the combined effect of catalyst, temperature, vacuum, and agitation allows for monomer reaction and removal of reaction by-products to displace the reaction equilibrium and effect polymer chain growth. A common polycarbonate made in melt polymerization reactions is derived from bisphenol A (BPA) via reaction with diphenyl carbonate (DPC). This reaction can be catalyzed by, for example, tetra methyl ammonium hydroxide (TMAOH) or tetrabutyl phosphonium acetate (TBPA), which can be added into a monomer mixture prior to being introduced to a first polymerization unit and sodium hydroxide (NaOH), which can be added to the first reactor or upstream of the first reactor and after a monomer mixer.

The melt polycarbonate in some aspects may have a molecular weight (Mw) of 15,000 to 40,000 Dalton when measured using GPC methods on a polycarbonate basis. The melt polycarbonate product may have an endcap level of 45% to 80%. Some polycarbonates have an endcap level of 45% to 75%, 55 % to 75%, 60% to 70% or 60% to 65%. Certain polycarbonates have at least 200 parts per million (ppm) of hydroxide groups. Certain polycarbonates have 200-1100 ppm or 950 to 1050 ppm hydroxide groups.

The polycarbonate polymer may contain endcapping agents. Any suitable endcapping agents can be used provided that such agents do not significantly adversely impact the desired properties of the polycarbonate composition (transparency, for example). Endcapping agents include mono-phenolic compounds, mono-carboxylic acid chlorides, and/or mono-chloroformates. Mono-phenolic endcapping agents are exemplified by monocyclic phenols such as phenol and C1-C22 alkyl-substituted phenols such as p-cumyl-phenol, resorcinol monobenzoate, and p- and tertiary-butyl phenol; and monoethers of diphenols, such as p-methoxyphenol.

Apart from the main polymerization reaction in polycarbonate production, there is a series of side reactions consisting of chain rearrangements of the polymer backbone that lead to branching that are often referred to as Fries rearrangement. Some of these polycarbonates include from 200 to 2000 ppm, or from 250 to 1800 ppm Fries products. The Fries species specifically found in bisphenol A melt polycarbonates include the ester type of structures A, B, and C.

1. Linear Fries:

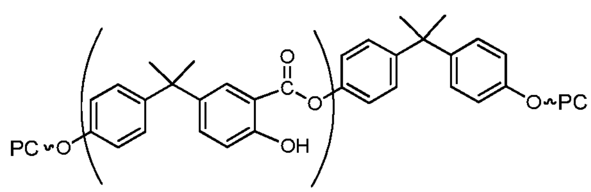

2. Branched Fries:

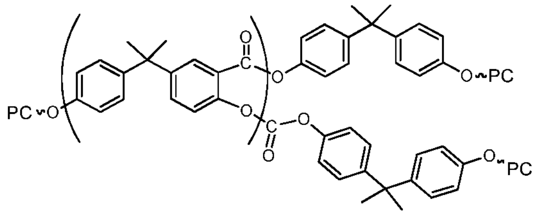

3. Acid Fries:

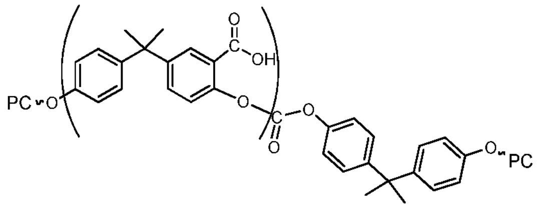

The Fries reaction is induced by the combined effect of basic catalysts, temperature, and residence time, which generally result in melt-produced polycarbonates being branched as compared with the interfacial polycarbonates since their manufacturing temperatures are lower. Because high branching levels in the resin can have a negative effect on the mechanical properties of the polycarbonate (for example, on impact strength), a product with lower branched Fries product may be desirable.

In some aspects the polycarbonate polymer is a linear bisphenol-A polycarbonate produced by a melt polymerization process. In other aspects the polycarbonate polymer is a linear bisphenol-A polycarbonate produced by an interfacial polymerization process.

In some compositions, the polycarbonate polymer comprises at least one polycarbonate polymer having a molecular weight (Mw) of at least 20,000 grams per mole (g/mol) and a second polycarbonate polymer have a molecular weight (Mw) of less than 20,000 g/mol. In some compositions, the molar ratio of said first polycarbonate polymer to said second polycarbonate polymer is 1.4:1 to 3.2:1. In other compositions, the molar ratio of said first polycarbonate polymer to said second polycarbonate polymer is 1.5:1 to 3.0:1.

In certain aspects, polycarbonate produced by interfacial polymerization may be utilized. In some processes, bisphenol A and phosgene are reacted in an interfacial polymerization process. Typically, the disodium salt of bisphenol A is dissolved in water and reacted with phosgene which is typically dissolved in a solvent that not miscible with water (such as a chlorinated organic solvent like methylene chloride).

In some aspects, the polycarbonate comprises interfacial polycarbonate having a weight average molecular weight of from 10,000 Daltons to 50,000 Daltons, preferably 15,000 to 45,000 Daltons. Some interfacial polycarbonates have an endcap level of at least 90% or preferably 95%.

Polycarbonate-Polysiloxane Copolymer

As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer comprising one or more polycarbonate blocks and one or more polysiloxane blocks. In some aspects, the polysiloxane-polycarbonate copolymer comprises polydiorganosiloxane blocks comprising structural units of the general formula (3) below:

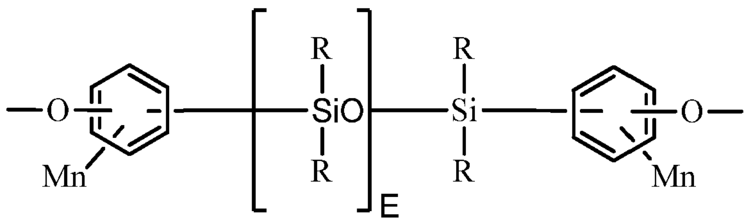

(3)

wherein the polydiorganosiloxane block length (E) is from 10 to 100, preferably 20 to 60, more preferably 30 to 50; wherein each R group can be the same or different, and is selected from a C1-13 monovalent organic group; wherein each M can be the same or different, and is selected from a halogen, cyano, nitro, C1-C8 alkylthio, C1-C8 alkyl, C1-C8 alkoxy, C2-C8 alkenyl, C2-C8 alkenyloxy group, C3-C8 cycloalkyl, C3-C8 cycloalkoxy, C6-C10 aryl, C6-C10 aryloxy, C7-C12 aralkyl, C7- C12aralkoxy, C7- C12 alkylaryl, or C7- C12 alkylaryloxy, and where each n is independently 0, 1, 2, 3, or 4.

The polysiloxane-polycarbonate copolymer also comprises polycarbonate blocks comprising structural units of the general formula (4) below:

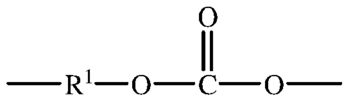 (4)

wherein at least 60 percent of the total number of R1 groups comprise aromatic moieties and the balance thereof comprise aliphatic, alicyclic, or aromatic moieties.

Certain polycarbonate-polysiloxane resins comprise allylphenol capped siloxanes. Such resins comprise the structure of the formula (5) below:

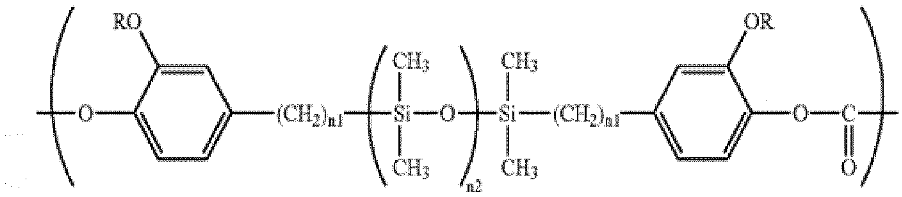

(5)

where R is an alkyl group having 1-3 carbon atoms, n1 is an integer of from 2 to 4 and n2 is an integer of from 1 to 200. Polycarbonate-polysiloxane copolymers comprising such structures can be found in European Patent Application No. 1757634, disclosing various compositions and methods for manufacture of same.

In a particular aspect the poly(carbonate-siloxane) copolymer comprises bisphenol carbonate units of the formula (6) below:

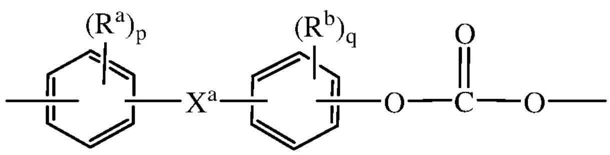

(6)

wherein $R^a$ and $R^b$ are each independently $C_{1-12}$ alkyl, $C_{1-12}$ alkenyl, $C_{3-8}$ cycloalkyl, or $C_{1-12}$ alkoxy,
p and q are each independently 0 to 4, and
$X^a$ is a single bond, -O-, -S-, -S(O)-, $-S(O)_2-$, -C(O)-, a $C_{1-11}$ alkylidene of formula - $C(R^c)(R^d)$ - wherein $R^c$ and $R^d$ are each independently hydrogen or $C_{1-10}$ alkyl, or a group of the formula $-C(=R^e)-$ wherein $R^e$ is a divalent $C_{1-10}$ hydrocarbon group; and siloxane units of the formulae (7), (8) below:

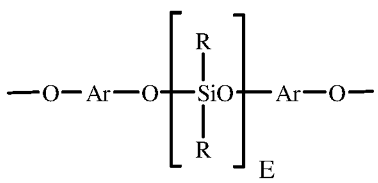 (7), 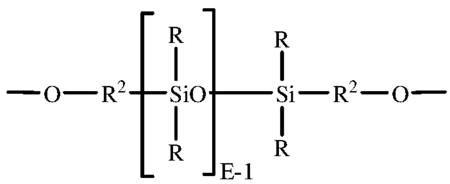 (8),

or a combination comprising at least one of the foregoing, wherein

R is each independently a $C_{1-13}$ monovalent hydrocarbon group,
Ar is each independently a $C_{6-30}$ aromatic group,
$R^2$ is each independently a $C_{2-8}$ alkylene group, and
E has an average value of 10 to 200.

Certain polysiloxane-polycarbonates materials include materials disclosed and described in U.S. Patent No. 7,786,246, disclosing various compositions and methods for manufacture of same.

The polycarbonate-siloxane copolymer comprises 10 wt% to 40 wt% siloxane. In particular aspects, the polycarbonate-siloxane copolymer comprises 15 to 25 wt% siloxane. Certain polycarbonate-polysiloxane copolymers have a polydiorganosiloxane block having from 20 to 60 diorganosiloxane units. The polycarbonate-siloxane copolymer is

present in an amount effective to provide a total siloxane content of 1 wt% to 5 wt% based on the total weight of the composition.

In some aspects, the polycarbonate in the polycarbonate-siloxane copolymer is a linear bisphenol-A polycarbonate produced by a melt polymerization process. In other aspects the polycarbonate in the polycarbonate-siloxane copolymer is a linear bisphenol-A polycarbonate produced by an interfacial polymerization process.

In some aspects, the composition comprises from 2.0 wt% to 49.5 wt% of at least one poly(carbonate-siloxane) copolymer.

Release Agent

Examples of mold release agents include both aliphatic and aromatic carboxylic acids and their alkyl esters, for example, stearic acid, behenic acid, pentaerythritol stearate, glycerin tristearate, and ethylene glycol distearate. Polyolefins such as high-density polyethylene, linear low-density polyethylene, low-density polyethylene, and similar polyolefin homopolymers and copolymers can also be used a mold release agents. Some compositions use pentaerythritol tetrastearate, glycerol monostearate, glycerol tristearate, a wax or a poly-alpha-olefin.

Mold release agents are typically present in the composition at 0.05 wt% to 1 wt %, based on total weight of the composition, and in particular aspects from 0.1 wt% to 0.7 wt %, from 0.1 wt% to 0.5 wt%, or from 0.1 wt% to 0.4 wt%. Particular aspects have less than 0.3 wt%, or even less than 0.2 wt% release agent.

In some aspects the mold release agents will have high molecular weight, typically greater than 300, to prevent loss of the release agent from the molten polymer mixture during melt processing.

Additional Components

The additive composition can include an impact modifier, flow modifier, antioxidant, heat stabilizer, light stabilizer, ultraviolet (UV) light stabilizer, UV absorbing additive, plasticizer, lubricant, antistatic agent, anti-fog agent, antimicrobial agent, colorant (e.g., a dye or pigment), surface effect additive, flame retardant, radiation stabilizer, anti-drip agent (e.g., a PTFE-encapsulated styrene-acrylonitrile copolymer (TSAN)), or a combination thereof. For example, a combination of a heat stabilizer and ultraviolet light stabilizer can be used. In general, the additives are used in the amounts generally known to be effective. For example, the total amount of the additive composition can be from 0.001 wt% to 10.0 wt%, or from 0.01 wt% to 5 wt%, each based on the total weight of all ingredients in the composition.

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition.

Examples of impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styrene-isoprene-styrene (SIS), styrene-(ethylene-propylene)-styrene (SEPS), methyl methacrylate-butadiene-styrene (MBS), high rubber graft (HRG), and the like. Some suitable impact modifies include PC(polycarbonate)/ABS (such as Cycoloy PC/ABS) and MBS type formulations.

The polycarbonate compositions can optionally include a colorant composition containing pigment and/or dye additives. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C2-8) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as Irgafos® 168. Heat stabilizers are generally used in amounts of from 0.01 wt% to 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), polyethylene, waxes (e.g., beeswax, montan wax, paraffin wax, or the like), or combinations comprising at least one of the foregoing plasticizers, lubricants, and mold release agents. These are generally used in amounts of from 0.01 wt% to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or combinations comprising at least one of the foregoing light stabilizers. The UV stabilizers can be present in an amount of from 0.01 wt% to 1 wt%, specifically, from 0.1 wt% to 0.5 wt%, and more specifically, from 0.15 wt% to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of from 0.01 wt% to 0.1 wt%, based on 100 parts by weight of the total composition, excluding any filler.

## Polymer Mixtures

The polymer compositions can be formed by techniques known to those skilled in the art. Extrusion and mixing techniques, for example, may be utilized to combine the components of the polymer composition.

The polymer composition comprises (a) from 49.5 wt % to 97.95 wt % of at least one homopolycarbonate polymer; (b) from 2.0 wt % to 49.5 wt % of at least one poly(carbonate-siloxane) copolymer in an amount effective to provide a total siloxane content of 1.0 wt% to 5.0 wt% based on the total weight of the thermoplastic composition;; and (c) from 0.05 wt % to 1.0 wt % of at least one release agent. The polymer composition exhibits a melt volume flow rate (MVR) of at least 25 $cm^3$/10 min, as determined according to ISO 1133 at 300°C using a 1.2 kg load. The polymer composition also has a ductile/brittle transition temperature of less than or equal to 10 °C as determined in accordance with ISO 180-1A on a molded part having a thickness of 3 mm; In some aspects, certain polymer compositions exhibit melt volume ratios of at least 35 or 45 $cm^3$/10 min, as determined according to ISO 1133 at 300°C using a 1.2 kg load.

In some aspects, the polymer composition disclosed herein may exhibit a heat distortion temperature (HDT) of at least 120 degrees Celsius at 1.8 megapascals (MPa) as determined by ISO 75/Ae.

The composition comprises siloxane content of 1 wt% to 5 wt%. In some aspects, the composition has a siloxane content of 1 wt% to 2 wt%.

The composition may be a notched Izod impact strength of at least 40 kilojoules per square meter ($kJ/m^2$) at 23°C, as determined according to ISO 1801/A on a 3 mm thick bar. In some aspects, certain compositions exhibit a notched Izod impact strength of at least 40 $kJ/m^2$ at 10°C or lower temperatures, as determined according to ISO 1801/A on a 3 mm thick bar.

Molds

Molds for forming molded articles are well known to those skilled in the art and can be formed from conventional materials. In the instant disclosure, molded parts may include draft angles of 0.1 degree to 7 degrees. In some aspects, molded parts include draft angles that are less than 5 degrees or less than 0.1 degrees or less than 1 degree or less than 3 degrees.

In some aspects, the disclosure concerns heating a composition and feeding the heated composition into a heated barrel of an injection molding machine and allowing the composition to melt. The melted composition can then be injected at elevated pressure into a mold cavity. Once the composition solidifies (either by passive or active cooling) forming a molded composition, the molded composition may be ejected from the mold. In some aspects, a demolding ejection force of less than 400 Newtons (N), or less than 350 N, or less than 300 N, or even less than 250 N is required to remove the molded composition from the mold.

In some aspects, a demolding coefficient of friction of less than 20, or less than 18, or less than 16, or even less than 14 is measured according to UL410.

As illustrated in FIG. 1, molded articles according to aspects of the present disclosure allow reduced draft, enabling new shapes, and lower part volumes or improved optical surface areas. As further illustrated in FIGS. 2 and 3, molded articles according to aspects of the present disclosure have high flow and improved release characteristic that enable box designs with lower draft angles (FIG. 3) and larger ribs (FIG. 2) due to more rectangular walls with minimum release angle.

The composition disclosed herein may require an ejection force at least 50% lower than an ejection force required for a substantially identical reference article without a polycarbonate-polysiloxane copolymer.

In some aspects, the composition may exhibit a coefficient of friction for removal of at least 15% lower than a coefficient of friction for removal of a substantially identical reference article without a polycarbonate-polysiloxane copolymer.

Metallization

The compositions can be used to manufacture a variety of articles, and in particular, metallized articles suited for automotive bezels or reflectors. The thermoplastic compositions are preferably directly metallizable for use in manufacture of metallized articles (e.g., metallized bezels or housing for consumer devices).

For purposes of the present disclosure a "metallized" surface is a surface that is covered with a coating including one or more metals. The metallizing step can, in various aspects, be performed using conventional techniques. For example, in one aspect, an electroless copper plating bath is used during the metallization step in the manufacturing process. Thus, in various aspects, plating a metal layer onto the thermoplastic composition or article(s) formed therefrom is metallization. In certain aspects the composition/article may be metallized by vapor deposition, non-conducting vacuum metallization or overmolding. The metal can be any metal allowing for good adhesion to the composition/article and imparting good cosmetic appearance. The composition/article can retain its properties and structural integrity after being exposed to various metallization processes to be coated, for example, with aluminum or other metals providing good adhesion to the composition/article and impart good cosmetic appearance.

Definitions

It is to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural

equivalents unless the context clearly dictates otherwise. Thus, for example, reference to "a polycarbonate polymer" includes mixtures of two or more polycarbonate polymers.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed. When more than one range for a particular value is disclosed, the ranges are combinable to form additional aspects.

As used herein, the terms "about" and "at or about" mean that the amount or value in question can be the designated value, approximately the designated value, or about the same as the designated value. It is generally understood, as used herein, that it is the nominal value indicated $\pm 5\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

References in the specification and concluding claims to parts by weight of a particular element or component in a composition or article denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "weight %," and "wt%" of a component, which can be used interchangeably, unless specifically stated to the contrary, are based on the total weight of the formulation or composition in which the component is included. For example if a particular element or component in a composition or article is said to have 8% by weight, it is understood that this percentage is relative to a total compositional percentage of 100% by weight.

As used herein, the terms "weight average molecular weight" or "Mw" can be used interchangeably, and are defined by the formula:

$$M_w = \frac{\sum N_i M_i^2}{\sum N_i M_i},$$

where Mi is the molecular weight of a chain and Ni is the number of chains of that molecular weight. Mw can be determined for polymers, e.g. polycarbonate polymers, by methods well known to a person having ordinary skill in the art using molecular weight standards, e.g. polycarbonate standards or polystyrene standards, and in particular certified or traceable molecular weight standards. Polystyrene basis refers to measurements using a polystyrene standard.

The term "siloxane" refers to a segment having a Si-O-Si linkage.

The term "flowable" means capable of flowing or being flowed. Typically a polymer is heated such that it is in a melted state to become flowable.

°C is degrees Celsius, μm is micrometer, Kg is kilogram.

"Interfacial polycarbonate" is produced by a process where typically the disodium salt of bisphenol A (BPA) is dissolved in water and reacted with phosgene which is typically dissolved in a solvent that is not miscible with water.

"Melt polycarbonate" is produced by a process where BPA reacts with diphenyl carbonate (DPC) in a molten state without the solvent.

Melt Volume Flow Rate (MVR) is measured according to ISO 1133 at 300 °C using a 1.2 kg load.

Ejection force may be measured by injection molding sleeves in a core and then measuring the force necessary to remove the sleeve from the core. At the opening of the mold, the sleeve remains on the core due to the material contraction. At the end of the opening stroke, the ejector pins detach the sleeve from the core. The force applied to the sleeve for demolding is measured as the mold release force. The surface temperature of the sleeve is kept constant so that an accurate comparison of ejection forces can be made.

"Draft angle" concerns the slope of the wall of a mold as depicted in, e.g., FIG. 4.

Aspects

Aspect 1. An automotive article comprising a thermoplastic composition comprising:

(a) from 49.5 wt % to 97.95 wt % of at least one homopolycarbonate polymer;

(b) from 2.0 wt % to 49.5 wt % of at least one poly(carbonate-siloxane) copolymer in an amount effective to provide a total siloxane content of 1.0 wt% to 5.0 wt% based on the total weight of the thermoplastic composition; and

(c) from 0.05 wt % to 1.0 wt % of at least one release agent,

wherein the thermoplastic composition exhibits a melt volume flow rate (MVR) of at least 25 $cm^3$/10 min, as determined according to ISO 1133 at 300°C using a 1.2 kg load;
a ductile/brittle transition temperature of less than or equal to 10 °C as determined in accordance with ISO 180-1A on a molded part having a thickness of 3 mm; and
an L* that is less than 30% higher compared to a reference blend without the polycarbonate-siloxane copolymer, as measured according to ASTM D1729 on a 3 mm thick metallized plaque in reflectance and specular excluded mode.

Aspect 2. An automotive article comprising a thermoplastic composition comprising:

(a) from 49.5 wt % to 97.95 wt % of at least one homopolycarbonate polymer;
(b) from 2.0 wt % to 49.5 wt % of at least one poly(carbonate-siloxane) copolymer in an amount effective to provide a total siloxane content of 1.0 wt% to 5.0 wt% based on the total weight of the thermoplastic composition; and
(c) from 0.05 wt % to 1.0 wt % of at least one release agent,

wherein the thermoplastic composition exhibits
a melt volume flow rate (MVR) of at least 25 $cm^3$/10 min, as determined according to ISO 1133 at 300°C using a 1.2 kg load;
a ductile/brittle transition temperature of less than or equal to 10 °C as determined in accordance with ISO 180-1A on a molded part having a thickness of 3 mm; and
an L* that is less than 10, as measured according to ASTM D1729 on a 3 mm thick metallized plaque in reflectance and specular excluded mode.

Aspect 3. The automotive article of any one of Aspects 1 to 2, wherein the polycarbonate polymer is a melt polycarbonate polymer, an interfacial polycarbonate polymer, or a combination thereof.
Aspect 4. The automotive article of any one of Aspects 1 to 3, wherein the poly(carbonate-siloxane) copolymer comprises bisphenol carbonate units of the formula

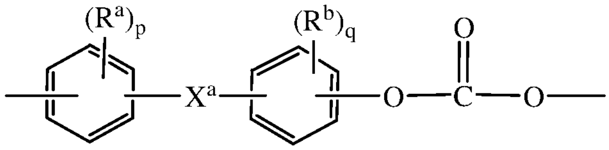

wherein $R^a$ and $R^b$ are each independently $C_{1-12}$ alkyl, $C_{1-12}$ alkenyl, $C_{3-8}$ cycloalkyl, or $C_{1-12}$ alkoxy,
p and q are each independently 0 to 4, and
$X^a$ is a single bond, -O-, -S-, -S(O)-, $-S(O)_2-$, -C(O)-, a $C_{1-11}$ alkylidene of formula - $C(R^c)(R^d)$ - wherein $R^c$ and $R^d$ are each independently hydrogen or $C_{1-10}$ alkyl, or a group of the formula $-C(=R^e)-$ wherein $R^e$ is a divalent $C_{1-10}$ hydrocarbon group; and siloxane units of the formulas

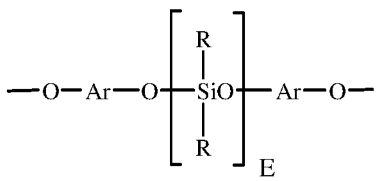 , 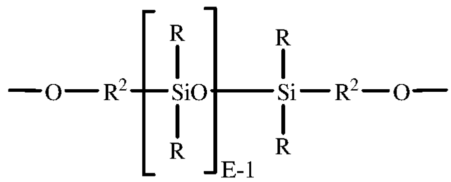 ,

or a combination comprising at least one of the foregoing, wherein

R is each independently a $C_{1-13}$ monovalent hydrocarbon group,
Ar is each independently a $C_{6-30}$ aromatic group,
$R^2$ is each independently a $C_{2-8}$ alkylene group, and
E has an average value of 10 to 200.

Aspect 5. The automotive article of any one of Aspects 1 to 4, wherein the article is used in an automotive bezel or automotive reflector.
Aspect 6. The automotive article of any one of Aspects 1 to 5, wherein the release agent comprises pentaerythrityl tetrastearate.
Aspect 7. The automotive article of any one of Aspects 1 to 5, wherein the release agent comprises glycerol tristearate.
Aspect 8. The automotive article of any one of Aspects 1 to 7, wherein the thermoplastic composition further comprises a processing aid, a heat stabilizer, an antioxidant, an ultra violet light absorber, or a combination thereof.
Aspect 9. The automotive article of any one of Aspects 1 to 8, wherein the thermoplastic composition exhibits a MVR of at least 35 $cm^3$/10 min, as determined according to ISO 1133 at 300°C using a 1.2 kg load.
Aspect 10. The automotive article of any one of Aspects 1 to 9, wherein the thermoplastic composition exhibits a MVR of at least 45 $cm^3$/10 min, as determined according to ISO 1133 at 300°C using a 1.2 kg load.
Aspect 11. The automotive article of any one of Aspects 1 to 10, wherein the thermoplastic composition exhibits a heat distortion temperature of at least 120°C at about 1.8 MPa, as determined according to ISO 75/Ae.
Aspect 12. The automotive article of any one of Aspects 1 to 11, wherein the thermoplastic composition exhibits a notched Izod impact strength of at least 40 $kJ/m^2$ at 23°C, as determined according to ISO 180/1A on a 3 mm thick bar.
Aspect 13. The automotive article of any one of Aspects 1 to 12, wherein the thermoplastic composition exhibits a notched Izod impact strength of at least 40 $kJ/m^2$ at 10°C, as determined according to ISO 180/1A on a 3 mm thick bar.
Aspect 14. The automotive article of any one of Aspects 1 to 13, wherein the thermoplastic composition exhibits a coefficient of friction of less than 20 as determined by UL410.
Aspect 15. The automotive article of anyone of anyone of Aspects 1 to 14, wherein a demolding ejection force of less than 400 N, or less than 350 N, or less than 300 N, or less than 250 N is required to remove the article from a mold.
Aspect 16. A method for forming an article, comprising:

forming a thermoplastic composition comprising:

(a) from 49.5 wt % to 97.95 wt % of at least one homopolycarbonate polymer;

(b) from 2 wt % to 49.5 wt % of at least one polycarbonate-siloxane copolymer in an amount effective to provide a total siloxane content of 1.0 wt% to 5 wt% based on the total weight of the thermoplastic composition; and

(c) from 0.05 wt % to 1.0 wt % of at least one release agent,

wherein the thermoplastic composition exhibits
a melt volume flow rate (MVR) of at least 25 $cm^3$/10 min, as determined according to ISO 1133 at 300°C using a 1.2 kg load;
a ductile/brittle transition temperature of less than or equal to 10 °C as determined in accordance with ISO 180-1A on a molded part having a thickness of 3 mm;
an L* that is less than 30% higher compared to a reference blend without the poly(carbonate-siloxane) copolymer, as measured according to ASTM D1729 on a 3 mm thick metallized plaque in reflectance and specular excluded mode; and

injection molding, extruding, rotational molding, blow molding or thermoforming the thermoplastic composition in a mold to form the article.

Aspect 17. The method of Aspect 16, further comprising removing the article from the mold, wherein the removal requires an ejection force at least 50% lower than the ejection force required for a substantially identical reference article without a polycarbonate-polysiloxane copolymer.
Aspect 18. The method of Aspect 17, wherein the coefficient of friction for the removal is at least 15% lower than the coefficient of friction for removal of a substantially identical reference article without a polycarbonate-polysiloxane copolymer.

Aspect 19. The method of any one of Aspects 16 to 18, wherein the mold comprises at least one draft angle from greater than 0° to 3°.

Aspect 20. The method of any one of Aspects 16 to 19, wherein the homopolycarbonate polymer is a melt polycarbonate polymer, an interfacial polycarbonate polymer, or a combination thereof.

Aspect 21. The method of any one of Aspects 16 to 20, wherein the thermoplastic composition exhibits a process window that allows processing at increased temperatures for the purpose of creating large, thin, or complex parts, wherein the process window is broad relative to the process window of a substantially identical reference composition without a polycarbonate-polysiloxane copolymer.

## Examples

The following non-limited examples illustrate certain aspects of the disclosure.

The ingredients utilized in the examples are shown in Table 1:

Table 1: Ingredient List

| | |
|---|---|
| PC1 | Linear Bisphenol A Polycarbonate homopolymer, produced via interfacial polymerization, Mw of about 18,800 g/mol as determined by GPC using polycarbonate standards, para-cumylphenol (PCP) end-capped |
| PC2 | Linear Bisphenol A Polycarbonate homopolymer, produced via interfacial polymerization, Mw of about 21,800 g/mol as determined by GPC using polycarbonate standards, para-cumylphenol (PCP) end-capped |
| PC3 | Branched Bisphenol A Polycarbonate homopolymer, produced via melt polymerization, Mw of about 18,000 g/mol as determined by GPC using polycarbonates standards, Fries level 250-350 ppm, BPA/Phenol end-capped |
| PC4 | Branched Bisphenol A Polycarbonate homopolymer, produced via melt polymerization, Mw of about 20,600 g/mol as determined by GPC using polycarbonates standards, Fries level about 350 ppm. BPA/Phenol end-capped |
| PC-Si | PDMS (polydimethylsiloxane) - Bisphenol A Polycarbonate copolymer, produced via interfacial polymerization, 20 wt% siloxane, average PDMS block length of 45 units (D45), Mw about 30,000 g/mol as determined by GPC using polycarbonate standards, para-cumylphenol (PCP) end-capped |
| Irgafos | Tris(2,4-ditert-butylphenyl)phosphite (Irgafos 168) |
| IM1 | Butylacrylate-methylmethacrylate core-shell rubber, Paraloid EXL3300 |
| IM2 | Silicone Polymer, KANEKA MR02 |
| IM3 | Methylmethacrylate Butadiene (MBS) shell-core copolymer, Paraloid EXL2650A |
| PETS | PETS - Pentaerythritol tetrastearate, >90% esterified |
| GTS | Octadecanoic acid, 1,2,3-propanetriyl ester (glycerol tristearate) |
| CB | Carbon black |

Unless stated otherwise, the compositions were made by the following procedures. All solid additives (e.g., stabilizers, colorants) were dry blended off-line as concentrates using one of the primary polymer powders as a carrier and starve-fed via gravimetric feeder(s) into the feed throat of the extruder. The remaining polymer(s) were starve-fed via gravimetric feeder(s) into the feed throat of the extruder as well.

Extrusion of all materials was performed on a 25 mm Werner-Pfleiderer ZAK twin-screw extruder (LID ratio of 33/1) with a vacuum port located near the die face. The extruder had 9 zones, which were set at temperatures of 40 °C (feed zone), 200 °C (zone 1), 250 °C (zone 2), 270 °C (zone 3), and 280 °C (zone 4 to 8). Screw speed was 300 revolutions per minute (rpm) and throughput was between 15 and 25 kilograms per hour (kg/hr).

The compositions were molded after drying at 120°C for 2 hours on a 45-ton Engel molding machine with a 22 mm screw or a 75-ton Engel molding machine with a 30 mm screw operating at a temperature around 300°C with a mold temperature of 80°C.

Physical testing (e.g., Vicat softening temperature, heat deflection temperature, melt volume flow rate, melt flow rate, melt viscosity, Izod notched impact, multiaxial impact) was performed according to ISO or ASTM standards. Unless specified to the contrary herein, all test standards are the most recent standard in effect at the time of filing this application.

Notched Izod Impact (INI) Strength may be used to compare the impact resistances of plastic materials. For

these examples, notched Izod impact strength was determined using a 3 mm thick molded, notched Izod impact bar according to ISO 180-2000. Tests were conducted at room temperature (23° C) and at low temperatures (10 °C and lower). Ductile to brittle transition temperature (Temp D/B) was determined as the temperature at which the material changes from ductile fracture with high impact energy above 30 kJ/$m^2$ to brittle fracture with low impact energy below 20 kJ/$m^2$.

Heat deflection temperature (HDT) was determined as flatwise under 1 0.45 MPa loading with a 4 mm thickness bar according to ISO75-2013.

Melt volume rate (MVR) was measured at 300°C/1.2 kg per ISO 1133-2011.

Spiral flow was measured under a molding temperature of 300°C, a mold temperature of 80°C, and an injection pressure of 2200 bar/s. The resulting molded parts had a thickness of 1 mm.

Metallization was performed on molded parts from a film gate injection set-up having dimensions 60 mm × 60 mm and a thickness of 3 mm using the physical vapor deposition (PVD) process. This process deposited a 100 - 150 nanometer (nm) thick aluminum layer onto one side of the molded part under vacuum, followed by a protective plasma-deposited siloxane hard-coat of 50 nm.

Color data was acquired on an X-rite 1-7 spectrophotometer in the range 360 nm to 750 nm. The reflection data was acquired in specular excluded mode using a 25 mm aperture according to ASTM D1003 using D65 illumination and a 10 degree observer angle. A mirror image has a high level of specular reflection. Hence when specular reflection is excluded from the measurement, a highly reflective, mirror like metallized surface will give low L*. A decrease in mirror like reflectivity will give more diffuse light scattering and hence give a higher L*.

Ejection force was measured by injection molding sleeves in a core and then measuring the force necessary to remove the sleeve from the core. At the opening of the mold, the sleeve remained on the core due to the material contraction. At the end of the opening stroke, the ejector pins detached the sleeve from the core. The force applied to the sleeve for demolding was measured as the ejection force. The surface temperature of the sleeve was kept constant so that an accurate comparison of ejection force could be made. An exemplary sleeve suitable for determining ejection force is shown in FIG. 5. Ejection force was measured with a composition formed into the exemplary sleeve/mold of FIG. 5. Dimensions of are in millimeters (mm) for the sleeve 202 configured to the sprue 204. It should be noted that other sleeves/molds with other dimensions could be used for comparing the compositions of the disclosure to the reference compositions. Measurement process parameters were as follows.

| | |
|---|---|
| Melt temperature | 300°C |
| Surface temperature of the core | 95°C |
| Ejection speed | 70 mm/second (s) |
| Cycle time | 20.1 s |
| Overall cooling time | 13.6 s |
| Pre-drying | 120°C, 4 hours (h) |
| Max. injection pressure | 1000 bar |
| Injection speed | 25 cm3/s |
| Changeover pressure | 100 bar |
| Temperature injection plate | 89°C |
| IM3 | 97°C |

An exemplary apparatus suitable for determining coefficient of friction is shown in FIG. 6. Coefficient of friction was measured according to UL 410. A specialized mold insert was designed for the measurement of the CoF. A concave disc was molded and after a fixed cooling time, the mold opened slightly to allow rotation of the disc while maintaining a constant normal pressure on the part. The friction core exerted a constant pressure onto the disc. The disc itself was rotated by an electro-motor driven belt, while the resulting torque of the disc onto the friction core was measured. By the concave shape of the disc, the contact surface area is limited to an outer ring with a fixed surface area. For each material, the coefficient of friction is determined as the average over 10 discs/measurements. It should be noted that other discs/molds with other dimensions could be used for comparing the compositions of the disclosure to the reference compositions. Measurement process parameters were as follows.

| | |
|---|---|
| Molding machine | Arburg 370 |

(continued)

| | |
|---|---|
| Screw diameter | 25 mm |
| Injection speed | 40 mm/s |
| Drying | Vacuum drying (120°C, 5 hrs) or hot air drying (120 °C, 3 hrs) |
| Melt temperature | 300 °C |
| Mold temperature | 90°C |
| Reference material | BMS Makrolon 2808 |

The improvement in the balance of flow, impact, and aesthetics and/or the balance of flow, impact and chemical resistance to sunscreen resulting from adding different amounts of polysiloxane copolymer to polycarbonate, compared to the addition of alternative core-shell impact modifiers is illustrated in Table 2:

Table 2

| | | CE1 | E2 | E3 | E4 | CE5 | CE6 | CE7 | CE8 |
|---|---|---|---|---|---|---|---|---|---|
| PC3 | % | 49.49 | 57.99 | 36.99 | | 57.99 | 36.99 | 36.99 | 36.99 |
| PC4 | % | 50 | 35 | 50 | | 35 | 50 | 50 | 50 |
| PC1 | % | | | | 57.99 | | | | |
| PC2 | % | | | | 35 | | | | |
| PC-Si | % | | 6.5 | 12.5 | 6.5 | | | | |
| IM1 | % | | | | | 2.8 | 5.3 | | |
| IM2 | % | | | | | | | 3.22 | |
| IM3 | % | | | | | | | | 2.65 |
| PETS | % | 0.3 | 0.3 | 0.3 | 0.3 | 0.3 | 0.3 | 0.3 | 0.3 |
| Irgafos 168 | % | 0.06 | 0.06 | 0.06 | 0.06 | 0.06 | 0.06 | 0.06 | 0.06 |
| CB | % | 0.15 | 0.15 | 0.15 | 0.15 | 0.15 | 0.15 | 0.15 | 0.15 |
| | | | | | | | | | |
| MVR | cc/10' | 42 | 42 | 29 | 37 | 45 | 35 | 35 | 33 |
| spiral flow at 1mm (2200bar/ 300°C) | cm | 17 | 18 | 16 | 17 | 19 | 18 | 17 | 17 |
| INI energy @23°C | $kJ/m^2$ | 8 | 45 | 53 | 51 | 44 | 44 | 46 | 46 |
| INI energy @0°C | $kJ/m^2$ | 8 | 16 | 47 | 34 | 19 | 40 | 16 | 24 |
| INI energy -10°C | $kJ/m^2$ | 8 | 14 | 40 | 17 | 16 | 37 | 14 | 13 |
| HDT 0.45 MPa | °C | 134 | 133 | 133 | 134 | 133 | 133 | 133 | 133 |
| L* metallized part | - | 6.2 | 6.9 | 7.6 | 7.0 | 12.3 | 16.9 | 14.3 | 12.9 |
| ΔL* vs CE1 | % | NA | 11 | 23 | 13 | 98 | 173 | 131 | 108 |

As demonstrated by the data:

1. Pure melt polycarbonate with 42 MVR (CE1) had good gloss after metallization as indicated by low L* of 6.2, but has poor impact with low INI energy at room temperature of 8 $kJ/m^2$ and had brittle fracture.
2. The impact of polycarbonate was improved by the addition of sufficient quantity of an impact modifier (CE5-CE8), selected from acrylic (e.g., IM1), silicone (e.g., IM2) and MBS (e.g., IM3) core shell impact modifiers, resulting in ductile impact at room temperature with INI energy above 40 $kJ/m^2$, while maintaining MVR above 30 and spiral flow comparable to CE1. However, in all cases, the L* of the metallized part was significantly increased by 100%

or more, to values above 10, indicating that the high gloss metallized layer is lost to a significant extent.

3. The impact of polycarbonate was also improved by the addition of PC-Si (E2 and E3), similar to IM1 (CE5 and CE6) and more efficient than IM2 and IM3 (CE7 and CE8), resulting in ductile impact at room temperature with INI energy above 40 kJ/$m^2$ (E2) or even at lower temperature (40 kJ/$m^2$ at -10°C for E3, which contains higher amounts of PC-Si), while maintaining MVR above 29 and spiral flow comparable to CE1. However, PC-Si behaved in a different way than IM1-3 on aesthetics as an optimized and unexpected balance for gloss and impact improvement, given that PC-Si addition had significantly less negative effect on L* of the metallized part, which changes less than 25%, and remains below a value of 10, compared to a 100% or more increase and values of above 10 for other impact modifiers.

4. Similar performance was achieved when interfacial PC (E4) was used instead of melt PC (E2) at same PC-Si loading, indicating polycarbonates from both interfacial and melt polymerization processes can be used.

This demonstrates that the compositions containing PC and PC-Si can achieve a good balance of impact (ductile Izod notched impact at room temperature or lower temperatures), high flow (indicated by high MVR and/or spiral flow) and good gloss retention after metallization.

Table 3: Example and Control Compositions

Table 3

| Component | CE9 | CE10 | CE11 | E12 | E13 | E14 |
|---|---|---|---|---|---|---|
| PC3 | 5 | 5 | 5 | 35.09 | 35.09 | 34.89 |
| PC4 | 94.79 | 94.49 | 94.59 | 55 | 55 | 55 |
| PC-Si | 0 | 0 | 0 | 9.5 | 9.5 | 9.5 |
| PETS | 0 | 0.3 | | 0.25 | | 0.3 |
| GTS | 0 | | 0.2 | | 0.2 | 0.1 |
| Irgafos | 0.06 | 0.06 | 0.06 | 0.06 | 0.06 | 0.06 |
| CB | 0.15 | 0.15 | 0.15 | 0.15 | 0.15 | 0.15 |
| % Siloxane | 0 | 0 | 0 | 1.9 | 1.9 | 1.9 |
| MVR | 30 | 31 | 30 | 31 | 31 | 31 |
| Coefficient of Friction | 49 | 28 | 35 | 15 | 13 | 15 |
| Ejection force | 646 | 435 | 506 | 316 | 312 | 281 |

As demonstrated by the data:

1. The coefficient of friction and ejection force were very high for pure melt polycarbonate with MVR of 30 with values around 50 and 650, respectively (CE9).

2. The coefficient of friction and ejection force were improved when release agents were added to melt polycarbonate with MVR of 30, such as PETS (CE10) and GTS (CE11), but values were still relatively high with a coefficient of friction of 28 (CE10) and 35 (CE11), and an ejection force of 435 (CE10) and 506 (CE11).

3. The addition of PC-Si to compositions containing melt polycarbonate and release agent (PETS, GTS or PETS and GTS, E12, E13 and E14 respectively) resulted in a significantly lower coefficient of friction and ejection force compared to similar compositions with PC-Si (CE10 and CE11) and similar for polycarbonate compositions with 0.3% release agent (PETS). Values for coefficient of friction of 15 and lower were achieved for E12-14 compared to values above 25 for CE10 and CE11, and values for ejection force of 320 and lower were achieved for E12-14 compared to values above 430 for CE10 and CE11.

This demonstrates that compositions containing PC, Si-PC and release (PETS and/or GTS) have a good performance in having high flow, with MVR above 30, and good release performance, far outperforming similar compositions without PC-Si, having a coefficient of friction below 20 and ejection force below 400, which was not achieved by the comparative examples. As such, these compositions are more suitable for molds with relatively sharp draft angles.

Tables 4A and 4B: Example and Control Compositions

Table 4A

| Component | CE16 | CE17 | E18 | E19 | E20 | E21 | E22 |
|---|---|---|---|---|---|---|---|
| PC1 | 25 | 30 | 28 | 28 | 30 | 30 | 35 |
| PC2 | 74.79 | 65.29 | 64.89 | 64.79 | 62.99 | 62.79 | 55.04 |
| PC-Si | 0 | 6.5 | 6.5 | 6.5 | 6.5 | 6.5 | 9.5 |
| PETS | 0 | 0 | 0.4 | 0.5 | | | 0.25 |
| GTS | 0 | 0 | | | 0.3 | 0.5 | |
| AD1 | 0.06 | 0.06 | 0.06 | 0.06 | 0.06 | 0.06 | 0.06 |
| AD2 | 0.15 | 0.15 | 0.15 | 0.15 | 0.15 | 0.15 | 0.15 |
| % Siloxane | 0 | 1.3 | 1.3 | 1.3 | 1.3 | 1.3 | 1.9 |
| MVR | 30 | 30 | 31 | 29 | 32 | 28 | 29 |
| Coefficient of Friction | 62 | 20 | 17 | 13 | 16 | 10 | 16 |
| Ejection force | 631 | 565 | 351 | 261 | 350 | 275 | 332 |

Table 4B

| Component | E23 | E24 | E25 | E26 | E27 | E28 | E29 |
|---|---|---|---|---|---|---|---|
| PC1 | 35 | 35 | 30 | 30 | 30 | 30 | 30 |
| PC2 | 55.09 | 54.89 | 57.19 | 56.79 | 57.19 | 56.99 | 56.79 |
| PC-Si | 9.5 | 9.5 | 12.5 | 12.5 | 12.5 | 12.5 | 12.5 |
| PETS | | 0.3 | 0.1 | 0.5 | | | |
| GTS | 0.2 | 0.1 | | | 0.1 | 0.3 | 0.5 |
| AD1 | 0.06 | 0.06 | 0.06 | 0.06 | 0.06 | 0.06 | 0.06 |
| AD2 | 0.15 | 0.15 | 0.15 | 0.15 | 0.15 | 0.15 | 0.15 |
| % Siloxane | 1.9 | 1.9 | 2.5 | 2.5 | 2.5 | 2.5 | 2.5 |
| MVR | 29 | 30 | 26 | 25 | 26 | 27 | 26 |
| Coefficient of friction | 15 | 16 | 15 | 12 | 14 | 12 | 9 |
| Ejection force | 330 | 292 | 329 | 242 | 341 | 291 | 235 |

As demonstrated by the data:

1. The coefficient of friction and ejection force were very high for pure interfacial polycarbonate with MVR of 29 with values around 60 and 630 respectively (CE16).
2. The coefficient of friction and ejection force were improved when PC-Si was added to interfacial polycarbonate (CE17), though the coefficient of friction of 20 and especially the ejection force of 565 were still relatively high.
3. When using the combination of PC-Si and release agent selected from PETS, GTS or their combination (E18-E29), a significantly improved release performance was obtained with a coefficient of friction typically below 20 and ejection force below 350, compared to significantly higher values for CE16 and CE17.
4. Coefficient of friction and ejection force was optimized by increasing the release content and/or the PC-Si content, which allowed coefficient of friction values below 15 or even below 10 and ejection force below 300 or even 250.

This demonstrates that compositions containing PC, Si-PC and release (PETS and/or GTS) have a good

performance in having high flow, with MVR above 25, and good release performance, far outperforming similar compositions without PC-Si or release, having a coefficient of friction below 20, more preferred below 15 or even 10, and ejection force below 400, more preferred below 300 or even 250, which was not achieved by the comparative examples. As such, these compositions are more suitable for molds with relatively sharp draft angles.

Table 5: Example and Control Compositions

Table 5

| Component | CE30 | CE31 | E32 | E33 | E34 | E35 | E36 | E37 | E38 |
|---|---|---|---|---|---|---|---|---|---|
| PC1 | 83.79 | 50 | 83 | 50 | 83 | 43 | 57 | 37 | 34 |
| PC2 | 15.6 | 44.99 | 10.99 | 42.99 | 9.99 | 49.99 | 29.99 | 49.99 | 50.49 |
| PC-Si | 0 | 4.5 | 5.5 | 6.5 | 6.5 | 6.5 | 12.5 | 12.5 | 15 |
| PETS | 0.4 | 0.3 | 0.3 | 0.3 | 0.3 | 0.3 | 0.3 | 0.3 | 0.3 |
| Irgafos 168 | 0.06 | 0.06 | 0.06 | 0.06 | 0.06 | 0.06 | 0.06 | 0.06 | 0.06 |
| CB | 0.15 | 0.15 | 0.15 | 0.15 | 0.15 | 0.15 | 0.15 | 0.15 | 0.15 |
| Siloxane% | 0.0 | 0.9 | 1.1 | 1.3 | 1.3 | 1.3 | 2.5 | 2.5 | 3.0 |
| MVR | 28 | 37 | 44 | 35 | 44 | 49 | 32 | 41 | 38 |
| Flow 1.5mm, 2200 bar) | 26 | 31 | 32 | 31 | 31 | 37 | 29 | 35 | 34 |
| INI@23°C | 56 | 52 | 48 | 57 | 50 | 50 | 60 | 53 | 55 |
| INI@0°C | 12 | 21 | 41 | 44 | 45 | 21 | 54 | 49 | 52 |
| Temp D/B °C | 5 | 5 | -5 | -5 | -5 | 0 | -25 | -15 | -30 |
| Gloss Units for metallized part | 1760 | NA | NA | NA | NA | 1758 | NA | 1702 | 1709 |

As demonstrated by the data:

1. A composition based on interfacial PC and no impact modifier had an MVR of 28, and a ductile/brittle (D/B) transition of +5 °C. Gloss of the metallized part was excellent visually and gives high value of 1760 (CE30).
2. The addition of PC-Si at relatively low siloxane content below 1% (CE31) in the total composition still resulted in relatively poor D/B transition of 5 °C, very similar to CE30.
3. The addition of higher amounts of PC-Si resulted in siloxane contents in the composition above 1% (E32-E38), significantly improved D/B transition of 0 °C and lower, at MVR values of 30 and higher, while still retaining the high gloss values above 1700, for siloxane loadings ranging from 1.3% (E35) to 2.5 (E37) and 3.0 (E38).
4. Impact was further optimized via increasing the siloxane loading of the composition, comparing E36-E38 to E32-E35, with D/B transitions as low as -30 °C, while still maintaining MVR above 30 and good metallization as indicated by very similar gloss, with values above 1700.

This demonstrates that compositions containing PC, PC-Si and release (PETS and/or GTS) have a good performance in having high flow and impact performance and gloss retention after metallization for siloxane loadings of 1% and higher in the total composition.

Table 6: Example and Control Compositions

Table 6

| Component | CE39 | CE40 | E41 | E42 | E43 | E44 | E45 | E46 |
|---|---|---|---|---|---|---|---|---|
| PC3 | 25 | 50 | 83 | 50 | 83 | 0 | 0 | 0 |

(continued)

| Component | CE39 | CE40 | E41 | E42 | E43 | E44 | E45 | E46 |
|---|---|---|---|---|---|---|---|---|
| PC4 | 74.29 | 46.99 | 10.99 | 42.99 | 9.99 | 92.99 | 86.99 | 84.49 |
| PC-Si | 0 | 2.5 | 5.5 | 6.5 | 6.5 | 6.5 | 12.5 | 15 |
| PAO | 0.5 | 0 | 0 | 0 | 0 | 0 | 0 | 0 |
| PETS | 0 | 0.3 | 0.3 | 0.3 | 0.3 | 0.3 | 0.3 | 0.3 |
| Irgafos 168 | 0.06 | 0.06 | 0.06 | 0.06 | 0.06 | 0.06 | 0.06 | 0.06 |
| CB | 0.15 | 0.15 | 0.15 | 0.15 | 0.15 | 0.15 | 0.15 | 0.15 |
| Siloxane% | 0.0 | 0.5 | 1.1 | 1.3 | 1.3 | 1.3 | 2.5 | 3.0 |
| MVR | 35 | 40 | 47 | 36 | 46 | 58 | 48 | 43 |
| INI@23°C | 15 | 17 | 33 | 58 | 43 | 41 | 49 | 51 |
| INI@0°C | 9 | 13 | 15 | 23 | 16 | 23 | 42 | 44 |
| Temp D/B | > 23 | 23 | 5 | -5 | 5 | 5 | -10 | -15 |
| Gloss Units on metallized part | 1777 | NA | NA | NA | NA | 1769 | 1726 | 1757 |
| Flow(1.5mm, 2200 bar) | 30 | 30 | 34 | 31 | 33 | 37 | 35 | 35 |

As demonstrated by the data:

1. A composition based on melt PC and no impact modifier had an MVR of 35, and a D/B transition of +23 °C. Gloss of the metallized part was excellent visually and gave a high value of 1777 (CE39).
2. The addition of PC-Si at relatively low siloxane content of 0.5% (CE40) in the total composition resulted in relatively poor D/B transition of 23 °C, very similar to CE39.
3. The addition of higher amounts of PC-Si resulting in siloxane contents in the composition above 1% (E41-E44) resulted in significantly improved D/B transition of 5 °C and lower, at MVR values of 30 and higher, while still retaining the high gloss values above 1700, for siloxane loadings ranging from 1.3% (E44) to 2.5 (E45) and 3.0 (E46).
4. Impact was further optimized by increasing the siloxane loading of the composition, comparing E45 and E46 to E41-E44, with D/B transitions as low as -15 °C, while still maintaining MVR above 30 and good metallization as indicated by very similar gloss, with values above 1700.

This demonstrates that compositions containing PC, PC-Si and release (PETS and/or GTS) have a good performance in having high flow and impact performance and gloss retention after metallization for siloxane loadings of 1% and higher in the total composition.

The above description is intended to be illustrative, and not restrictive. For example, the above-described examples (or one or more aspects thereof) may be used in combination with each other. Other aspects can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled according to the Protocol on the Interpretation of Article 69 EPC.

## Claims

**1.** An automotive article comprising a thermoplastic composition comprising:

(a) from 49.5 wt % to 97.95 wt % of at least one homopolycarbonate polymer;
(b) from 2.0 wt % to 49.5 wt % of at least one poly(carbonate-siloxane) copolymer in an amount effective to provide a total siloxane content of 1.0 wt% to 5.0 wt% based on the total weight of the thermoplastic composition;

and
(c) from 0.05 wt % to 1.0 wt % of at least one release agent,
wherein the thermoplastic composition exhibits
a melt volume flow rate (MVR) of at least 25 $cm^3$/10 min, as determined according to ISO 1133 at 300°C using a 1.2 kg load;
a ductile/brittle transition temperature of less than or equal to 10 °C as determined in accordance with ISO 180-1A on a molded part having a thickness of 3 mm; and
an L* that is less than 30% higher compared to a reference blend without the poly(carbonate-siloxane) copolymer, as measured according to ASTM D1729 on a 3 mm thick metallized plaque in reflectance and specular excluded mode; or
wherein the thermoplastic composition exhibits
a melt volume flow rate (MVR) of at least 25 $cm^3$/10 min, as determined according to ISO 1133 at 300°C using a 1.2 kg load;
a ductile/brittle transition temperature of less than or equal to 10 °C as determined in accordance with ISO 180-1A on a molded part having a thickness of 3 mm; and
an L* that is less than 10, as measured according to ASTM D1729 on a 3 mm thick metallized plaque in reflectance and specular excluded mode.

2. The automotive article of claim 1, wherein the poly(carbonate-siloxane) copolymer comprises bisphenol carbonate units of the formula

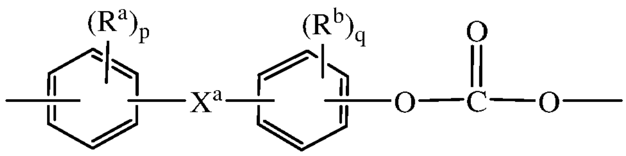

wherein $R^a$ and $R^b$ are each independently $C_{1-12}$ alkyl, $C_{1-12}$ alkenyl, $C_{3-8}$ cycloalkyl, or $C_{1-12}$ alkoxy,
p and q are each independently 0 to 4, and
$X^a$ is a single bond, -O-, -S-, -S(O)-, $-S(O)_2-$, -C(O)-, a $C_{1-11}$ alkylidene of formula - $C(R^c)(R^d)$ - wherein $R^c$ and $R^d$ are each independently hydrogen or $C_{1-10}$ alkyl, or a group of the formula $-C(=R^e)-$ wherein $R^e$ is a divalent $C_{1-10}$ hydrocarbon group; and siloxane units of the formulae

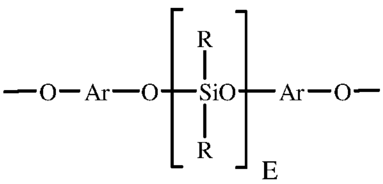,

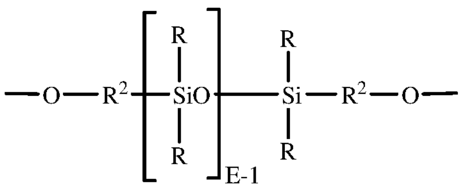,

or a combination comprising at least one of the foregoing, wherein

R is each independently a $C_{1-13}$ monovalent hydrocarbon group,
Ar is each independently a $C_{6-30}$ aromatic group,
$R^2$ is each independently a $C_{2-8}$ alkylene group, and

E has an average value of 10 to 200.

3. The automotive article of claim 1 or 2, wherein the release agent comprises pentaerythrityl tetrastearate or glycerol tristearate.

4. The automotive article of any one of claims 1 to 3, wherein the thermoplastic composition further comprises a processing aid, a heat stabilizer, an antioxidant, an ultra violet light absorber, or a combination thereof.

5. The automotive article of any one of claims 1 to 4, wherein the thermoplastic composition exhibits a MVR of at least 35 $cm^3$/10 min, preferably at least 45 $cm^3$/10 min, as determined according to ISO 1133 at 300°C using a 1.2 kg load.

6. The automotive article of any one of claims 1 to 5, wherein the thermoplastic composition exhibits a heat distortion temperature of at least 120°C at 1.8 MPa, as determined according to ISO 75/Ae.

7. The automotive article of any one of claims 1 to 6, wherein the thermoplastic composition exhibits a notched Izod impact strength of at least 15 kJ/$m^2$ at 23°C, as determined according to ISO 1801/A on a 3 mm thick bar.

8. The automotive article of any one of claims 1 to 7, wherein the thermoplastic composition exhibits a notched Izod impact strength of at least 40kJ/$m^2$ at 10°C, as determined according to ISO 1801/A on a 3 mm thick bar.

9. The automotive article of any one of claims 1 to 8, wherein the thermoplastic composition exhibits a coefficient of friction of less than 20 as determined by UL410.

10. The automotive article of any one of claims 1 to 9, wherein a demolding ejection force of less than 400 N, or less than 350 N, or less than 300 N, or less than 250 N is required to remove the housing from a mold.

11. The automotive article of any one of claims 1 to 10, wherein the article exhibits a metallization capability and a high gloss appearance,
wherein high gloss is defined by a value greater than 1700 Gloss Units by a standard ISO 2813 at 20°, 60°, and 85°, when measured on a metallized plaque.

12. The automotive article of any one of claims 1 to 11, wherein the automotive article comprises an automotive bezel or automotive reflector.

13. A method for forming an automotive article, comprising:
forming a thermoplastic composition comprising:

(a) from 49.5 wt % to 97.95 wt % of at least one homopolycarbonate polymer;
(b) from 2.0 wt % to 49.5 wt % of at least one poly(carbonate-siloxane) copolymer in an amount effective to provide a total siloxane content of 1.0 wt% to 5 wt% based on the total weight of the thermoplastic composition; and
(c) from 0.05 wt % to 1.0 wt % of at least one release agent,
wherein the thermoplastic composition exhibits
a melt volume flow rate (MVR) of at least 25 $cm^3$/10 min, as determined according to ISO 1133 at 300°C using a 1.2 kg load;
a ductile/brittle transition temperature of less than or equal to 10 °C as determined in accordance with ISO 180-1A on a molded part having a thickness of 3 mm;
an L* that is less than 30% higher compared to a reference blend without the poly(carbonate-siloxane) copolymer, as measured according to ASTM D1729 on a 3 mm thick metallized plaque in reflectance and specular excluded mode; and

injection molding, extruding, rotational molding, blow molding or thermoforming the thermoplastic composition in a mold to form the automotive article.

14. The method of claim 13, further comprising removing the article from the mold, wherein the removal requires an ejection force at least 50% lower than the ejection force required for a substantially identical reference article without a poly(carbonate-siloxane) copolymer.

15. The method of claim 13 or 14, wherein the thermoplastic composition exhibits a process window that allows processing at increased temperatures for the purpose of creating large, thin, or complex parts, wherein the process window is broad relative to the process window of a substantially identical reference composition without a poly(carbonate-siloxane) copolymer.

## Patentansprüche

1. Ein Kraftfahrzeugartikel, der eine thermoplastische Zusammensetzung umfasst, Folgendes umfassend:

(a) 49,5 Gewichtsprozent bis 97,95 Gewichtsprozent mindestens eines Homopolycarbonatpolymers;

(b) 2,0 Gewichtsprozent bis 49,5 Gewichtsprozent mindestens eines Poly(carbonat-siloxan-)Copolymers in einer Menge, die wirksam ist, um einen Gesamt-Siloxangehalt von 1,0 Gewichtsprozent bis 5,0 Gewichtsprozent, basierend auf dem Gesamtgewicht der thermoplastischen Zusammensetzung, zu ergeben; und
(c) 0,05 Gewichtsprozent bis 1,0 Gewichtsprozent mindestens eines Trennmittels,

wobei die thermoplastische Zusammensetzung Folgendes aufweist:

eine Schmelzvolumenfließrate (melt volume flow rate, MVR) von mindestens 25 $cm^3$/10 min, bestimmt nach ISO 1133 bei 300°C unter Verwendung einer Last von 1,2 kg;
eine Risshaltetemperatur von höchstens 10°C, bestimmt nach ISO 180-1A an einem Formteil mit einer Dicke von 3 mm; und
einen L*, der weniger als 30% höher ist als bei einer Vergleichsmischung ohne das Poly(carbonat-siloxan-)Copolymer, gemessen nach ASTM D1729 an einer 3 mm dicken metallisierten Platte im Modus ohne Remission und Glanzeinschluss; oder
wobei die thermoplastische Zusammensetzung Folgendes aufweist:

eine Schmelzvolumenfließrate (melt volume flow rate, MVR) von mindestens 25 $cm^3$/10 min, bestimmt nach ISO 1133 bei 300°C unter Verwendung einer Last von 1,2 kg;
eine Risshaltetemperatur von höchstens 10°C, bestimmt nach ISO 180-1A an einem Formteil mit einer Dicke von 3 mm; und
einen L*, der kleiner ist als 10, gemessen nach ASTM D1729 an einer 3 mm dicken metallisierten Platte im Modus ohne Remission und Glanzeinschluss.

**2.** Der Fahrzeugartikel gemäß Anspruch 1, wobei das Poly(carbonat-siloxan-)Copolymer Bisphenolcarbonateinheiten mit folgender Formel umfasst:

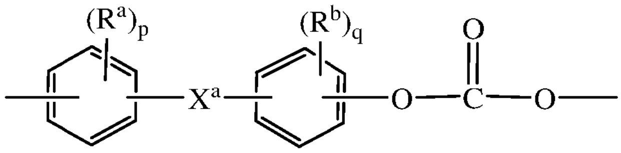

,

worin $R^a$ und $R^b$ jeweils unabhängig $C_{1-12}$-Alkyl, $C_{1-12}$-Alkenyl, $C_{3-8}$-Cycloalkyl oder $C_{1-12}$-Alkoxy sind,
p und q jeweils unabhängig 0 bis 4 sind und
$X^a$ eine Einfachbindung, -O-, -S-, -S(O)-, $-S(O)_2-$, -C(O)-, ein $C_{1-11}$-Alkyliden mit der Formel $-C(R^c)(R^d)-$ ist, worin $R^c$ und $R^d$ jeweils unabhängig Wasserstoff oder $C_{1-10}$-Alkyl sind, oder eine Gruppe mit der Formel $-C(=R^e)-$, worin $R^e$ eine zweiwertige $C_{1-10}$-Kohlenwasserstoffgruppe ist; und Siloxaneinheiten mit der Formel

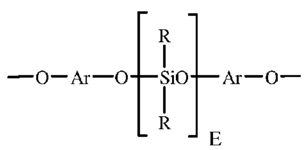 , 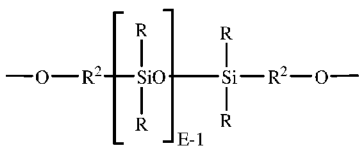 ,

oder eine Kombination, die mindestens eines der oben Genannten umfasst, worin
R jeweils unabhängig eine einwertige $C_{1-13}$-Kohlenwasserstoffgruppe ist,
Ar jeweils unabhängig eine aromatische $C_{6-30}$-Gruppe ist,
$R^2$ jeweils unabhängig eine $C_{2-8}$-Alkylengruppe ist und E einen Durchschnittswert von 10 bis 200 hat.

**3.** Der Kraftfahrzeugartikel gemäß Anspruch 1 oder 2, wobei das Trennmittel Pentaerythrityltetrastearat oder Glyceroltristearat umfasst.

4. Der Kraftfahrzeugartikel gemäß einem beliebigen der Ansprüche 1 bis 3, wobei die thermoplastische Zusammensetzung weiter eine Verarbeitungshilfe, einen Wärmestabilisator, ein Antioxidans, ein UV-Licht-Absorptionsmittel oder eine Kombination davon umfasst.

5. Der Kraftfahrzeugartikel gemäß einem beliebigen der Ansprüche 1 bis 4, wobei die thermoplastische Zusammensetzung eine MVR von mindestens 35 $cm^3$/10 min, vorzugsweise mindestens 45 $cm^3$/10 min, aufweist, bestimmt nach ISO 1133 bei 300°C unter Verwendung einer Last von 1,2kg.

6. Der Kraftfahrzeugartikel gemäß einem beliebigen der Ansprüche 1 bis 5, wobei die thermoplastische Zusammensetzung eine Wärmeformbeständigkeit von mindestens 120°C bei 1,8 MPa aufweist, bestimmt nach ISO 75/Ae.

7. Der Kraftfahrzeugartikel gemäß einem beliebigen der Ansprüche 1 bis 6, wobei die thermoplastische Zusammensetzung eine Izod-Kerbschlagzähigkeit von mindestens 15 $kJ/m^2$ bei 23°C aufweist, bestimmt nach ISO 1801/A an einem 3 mm dicken Stab.

8. Der Kraftfahrzeugartikel gemäß einem beliebigen der Ansprüche 1 bis 7, wobei die thermoplastische Zusammensetzung eine Izod-Kerbschlagzähigkeit von mindestens 40 $kJ/m^2$ bei 10°C aufweist, bestimmt nach ISO 1801/A an einem 3 mm dicken Stab.

9. Der Kraftfahrzeugartikel gemäß einem beliebigen der Ansprüche 1 bis 8, wobei die thermoplastische Zusammensetzung einen Reibungskoeffizienten von weniger als 20, bestimmt nach UL410, aufweist.

10. Der Kraftfahrzeugartikel gemäß einem beliebigen der Ansprüche 1 bis 9, wobei eine Entformungskraft von weniger als 400 N, weniger als 350 N, weniger als 300 N oder weniger als 250 N erforderlich ist, um das Gehäuse aus einer Form zu entfernen.

11. Der Kraftfahrzeugartikel gemäß einem beliebigen der Ansprüche 1 bis 10, wobei der Artikel eine Metallisierungsfähigkeit und ein Hochglanz-Aussehen aufweist,
wobei Hochglanz definiert ist durch einen Wert größer als 1700 Glanz-Einheiten durch eine ISO 2813-Norm bei 20°, 60° und 85°, gemessen an einer metallisierten Platte.

12. Der Kraftfahrzeugartikel gemäß einem beliebigen der Ansprüche 1 bis 11, wobei der Kraftfahrzeugartikel eine Kraftfahrzeug-Einfassung oder einen Kraftfahrzeug-Reflektor umfasst.

13. Ein Verfahren zum Formen eines Kraftfahrzeugartikels, das Folgendes umfasst:

das Formen einer thermoplastischen Zusammensetzung, die Folgendes umfasst:

(a) 49,5 Gewichtsprozent bis 97,95 Gewichtsprozent mindestens eines Homopolycarbonatpolymers;
(b) 2,0 Gewichtsprozent bis 49,5 Gewichtsprozent mindestens eines Poly(carbonat-siloxan-)Copolymers in einer Menge, die wirksam ist, um einen Gesamt-Siloxangehalt von 1,0 Gewichtsprozent bis 5 Gewichtsprozent, basierend auf dem Gesamtgewicht der thermoplastischen Zusammensetzung, zu liefern; und
(c) 0,05 Gewichtsprozent bis 1,0 Gewichtsprozent mindestens eines Trennmittels,

wobei die thermoplastische Zusammensetzung Folgendes aufweist:

eine Schmelzvolumenfließrate (MVR) von mindestens 25 $cm^3$/10 min, bestimmt nach ISO 1133 bei 300°C unter Verwendung einer Last von 1,2 kg;
eine Risshaltetemperatur von höchstens 10°C, bestimmt nach ISO 180-1A an einem Formteil mit einer Dicke von 3 mm;
einen L*, der um weniger als 30% höher ist als bei einer Vergleichsmischung ohne das Poly(carbonat-siloxan-)Copolymer, gemessen nach ASTM D1729 an einer 3 mm dicken metallisierten Platte im Modus ohne Remission und Glanzeinschluss; und

Spritzgießen, Extrudieren, Rotationsformen, Blasformen oder Wärmeformen der thermoplastischen Zusammensetzung in einer Form, um den Kraftfahrzeugartikel zu formen.

14. Das Verfahren gemäß Anspruch 13, das weiter das Entfernen des Artikels aus der Form umfasst, wobei das Entfernen

eine Ausstoßkraft erfordert, die um mindestens 50% niedriger ist als die Ausstoßkraft, die erforderlich ist für einen im Wesentlichen identischen Vergleichsartikel ohne Poly(carbonat-siloxan-)Copolymer.

**15.** Das Verfahren gemäß Anspruch 13 oder 14, worin die thermoplastische Zusammensetzung ein Prozessfenster aufweist, das die Verarbeitung bei erhöhten Temperaturen zu dem Zweck ermöglicht, große, dünne oder komplexe Teile zu erzeugen, wobei das Prozessfenster breit ist im Vergleich zum Prozessfenster einer im Wesentlichen identischen Vergleichszusammensetzung ohne Poly(carbonat-siloxan-)Copolymer.

## Revendications

**1.** Article d'automobile comprenant une composition thermoplastique comprenant :

(a) de 49,5 % en poids à 97,95 % en poids d'au moins un polymère d'homopolycarbonate ;
(b) de 2,0 % en poids à 49,5 % en poids d'au moins un copolymère de poly(carbonate-siloxane) en une quantité efficace pour obtenir une teneur en siloxane totale de 1,0 % en poids à 5,0 % en poids sur la base du poids total de la composition thermoplastique ; et
(c) de 0,05 % en poids à 1,0 % en poids d'au moins un agent antiadhésif,

dans lequel la composition thermoplastique présente
un indice de fluidité à chaud volumique (MVR) d'au moins 25 $cm^3$/10 min, tel que déterminé selon l'ISO 1133 à 300 °C en utilisant une charge de 1,2 kg ;
une température de transition ductile/fragile inférieure ou égale à 10 °C telle que déterminée selon l'ISO 180-1A sur une pièce moulée ayant une épaisseur de 3 mm ; et
un L* qui est moins de 30 % plus élevé par rapport à un mélange de référence sans le copolymère de poly(carbonate-siloxane), tel que mesuré selon l'ASTM D1729 sur une plaque métallisée de 3 mm d'épaisseur en mode composante de réflectance et spéculaire exclue ; ou
dans lequel la composition thermoplastique présente
un indice de fluidité à chaud volumique (MVR) d'au moins 25 $cm^3$/10 min, tel que déterminé selon l'ISO 1133 à 300 °C en utilisant une charge de 1,2 kg ;
une température de transition ductile/fragile inférieure ou égale à 10 °C telle que déterminée selon l'ISO 180-1A sur une pièce moulée ayant une épaisseur de 3 mm ; et
un L* qui est inférieur à 10, tel que mesuré selon l'ASTM D1729 sur une plaque métallisée de 3 mm d'épaisseur en mode composante de réflectance et spéculaire exclue.

**2.** Article d'automobile selon la revendication 1, dans lequel le copolymère de poly(carbonate-siloxane) comprend des motifs de carbonate de bisphénol de formule

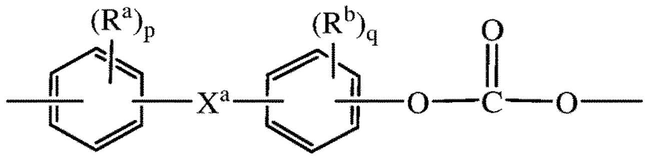

dans lequel $R^a$ et $R^b$ sont chacun indépendamment alkyle en $C_{1-12}$, alcényle en $C_{1-12}$, cycloalkyle en $C_{3-8}$ ou alcoxy en $C_{1-12}$,
p et q sont chacun indépendamment 0 à 4, et
$X^a$ est une simple liaison, -O-, -S-, -S(O)-, $-S(O)_2-$, -C(O)-, un alkylidène en $C_{1-11}$ de formule $-C(R^c)(R^d)-$ dans laquelle $R^c$ et $R^d$ sont chacun indépendamment hydrogène ou alkyle en $C_{1-10}$, ou un groupe de formule $-C(=R^e)-$ dans laquelle $R^e$ est un groupe hydrocarboné en $C_{1-10}$ divalent ; et des motifs siloxane de formules

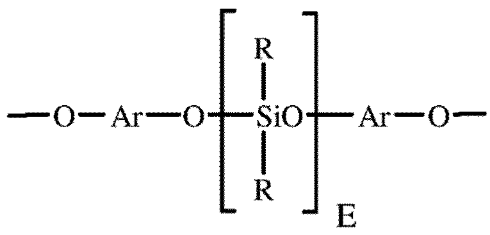

,

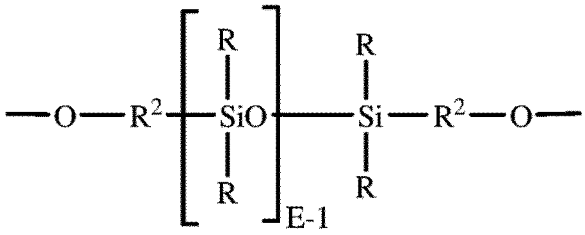

,

ou une combinaison comprenant au moins l'un de ceux mentionnés ci-dessus, dans lequel
R est chacun indépendamment un groupe hydrocarboné monovalent en $C_{1-13}$,
Ar est chacun indépendamment un groupe aromatique en $C_{6-30}$,
$R^2$ est chacun indépendamment un groupe alkylène en $C_{2-8}$, et

E a une valeur moyenne de 10 à 200.

**3.** Article d'automobile selon la revendication 1 ou 2, dans lequel l'agent antiadhésif comprend du tétrastéarate de pentaérythrityle ou du tristéarate de glycérol.

**4.** Article d'automobile selon l'une quelconque des revendications 1 à 3, dans lequel la composition thermoplastique comprend en outre un adjuvant de traitement, un stabilisant thermique, un antioxydant, un absorbeur de lumière ultraviolette, ou une combinaison de ceux-ci.

**5.** Article d'automobile selon l'une quelconque des revendications 1 à 4, dans lequel la composition thermoplastique présente un MVR d'au moins 35 $cm^3$/10 min, de préférence au moins 45 $cm^3$/10 min, tel que déterminé selon l'ISO 1133 à 300 °C en utilisant une charge de 1,2 kg.

**6.** Article d'automobile selon l'une quelconque des revendications 1 à 5, dans lequel la composition thermoplastique présente une température de déformation thermique d'au moins 120 °C à 1,8 MPa, telle que déterminée selon l'ISO 75/Ae.

**7.** Article d'automobile selon l'une quelconque des revendications 1 à 6, dans lequel la composition thermoplastique présente une résistance aux chocs Izod sur barreau entaillé d'au moins 15 $kJ/m^2$ à 23 °C, telle que déterminée selon l'ISO 1801/A sur une barre de 3 mm d'épaisseur.

**8.** Article d'automobile selon l'une quelconque des revendications 1 à 7, dans lequel la composition thermoplastique présente une résistance aux chocs Izod sur barreau entaillé d'au moins 40 $kJ/m^2$ à 10 °C, telle que déterminée selon l'ISO 1801/A sur une barre de 3 mm d'épaisseur.

**9.** Article d'automobile selon l'une quelconque des revendications 1 à 8, dans lequel la composition thermoplastique présente un coefficient de friction inférieur à 20 tel que déterminé selon UL410.

**10.** Article d'automobile selon l'une quelconque des revendications 1 à 9, dans lequel une force d'éjection de démoulage inférieure à 400 N, ou inférieure à 350 N, ou inférieure à 300 N, ou inférieure à 250 N est nécessaire pour retirer le boîtier d'un moule.

**11.** Article d'automobile selon l'une quelconque des revendications 1 à 10, dans lequel l'article présente une capacité de métallisation et un aspect de brillance élevée,
dans lequel une brillance élevée est définie par une valeur supérieure à 1700 unités de brillant selon la norme ISO 2813 à 20°, 60° et 85°, telle que mesurée sur une plaque métallisée.

**12.** Article d'automobile selon l'une quelconque des revendications 1 à 11, l'article d'automobile comprenant un enjoliveur d'automobile ou un réflecteur d'automobile.

**13.** Procédé de formation d'un article d'automobile, comprenant :

la formation d'une composition thermoplastique comprenant :

(a) de 49,5 % en poids à 97,95 % en poids d'au moins un polymère d'homopolycarbonate ;
(b) de 2,0 % en poids à 49,5 % en poids d'au moins un copolymère de poly(carbonate-siloxane) en une quantité efficace pour obtenir une teneur en siloxane totale de 1,0 % en poids à 5 % en poids sur la base du poids total de la composition thermoplastique ; et
(c) de 0,05 % en poids à 1,0 % en poids d'au moins un agent antiadhésif,

dans lequel la composition thermoplastique présente
un indice de fluidité à chaud volumique (MVR) d'au moins 25 $cm^3$/10 min, tel que déterminé selon l'ISO 1133 à 300 °C en utilisant une charge de 1,2 kg ;
une température de transition ductile/fragile inférieure ou égale à 10 °C telle que déterminée selon l'ISO 180-1A sur une pièce moulée ayant une épaisseur de 3 mm ; et
un L* qui est moins de 30 % plus élevé par rapport à un mélange de référence sans le copolymère de poly(carbonate-siloxane), tel que mesuré selon l'ASTM D1729 sur une plaque métallisée de 3 mm d'épaisseur en mode composante de réflectance et spéculaire exclue ; et moulage par injection, extrusion, rotomoulage, moulage par soufflage ou thermoformage de la composition thermoplastique dans un moule pour former l'article d'automobile.

**14.** Procédé selon la revendication 13, comprenant en outre le retrait de l'article du moule, dans lequel le retrait nécessite une force d'éjection au moins 50 % plus faible que la force d'éjection nécessaire pour un article de référence sensiblement identique sans copolymère de poly(carbonate-siloxane).

**15.** Procédé selon la revendication 13 ou 14, dans lequel la composition thermoplastique présente une fenêtre de traitement qui permet le traitement à des températures plus hautes dans le but de créer des pièces grandes, minces ou complexes, dans lequel la fenêtre de traitement est large par rapport à la fenêtre de traitement d'une composition de référence sensiblement identique sans copolymère de poly(carbonate-siloxane).

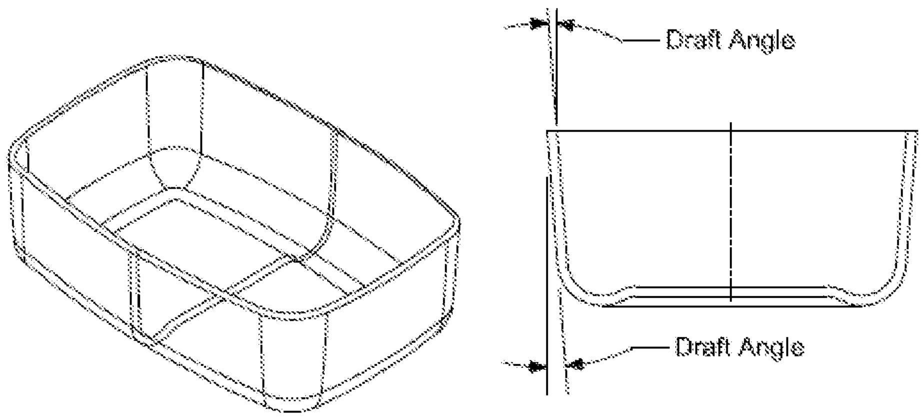


Fig. 1

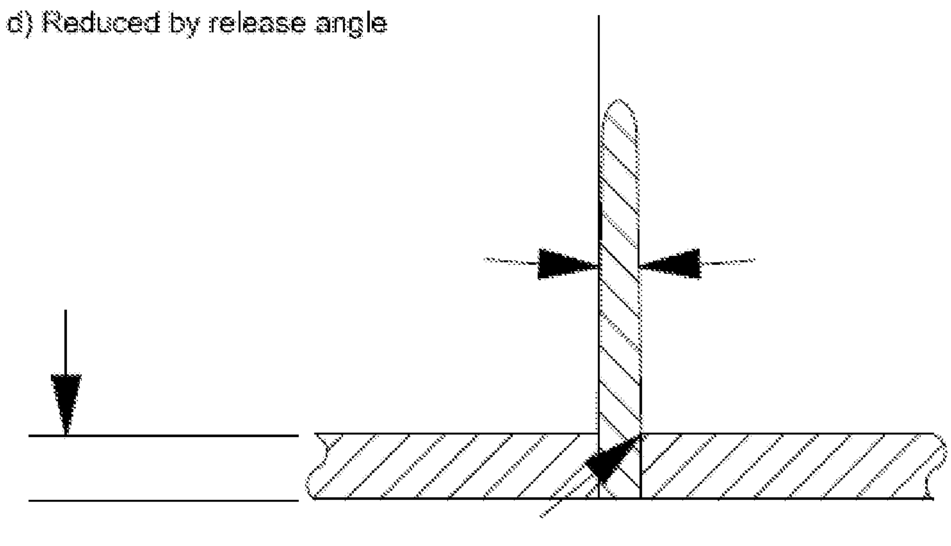


Fig. 2

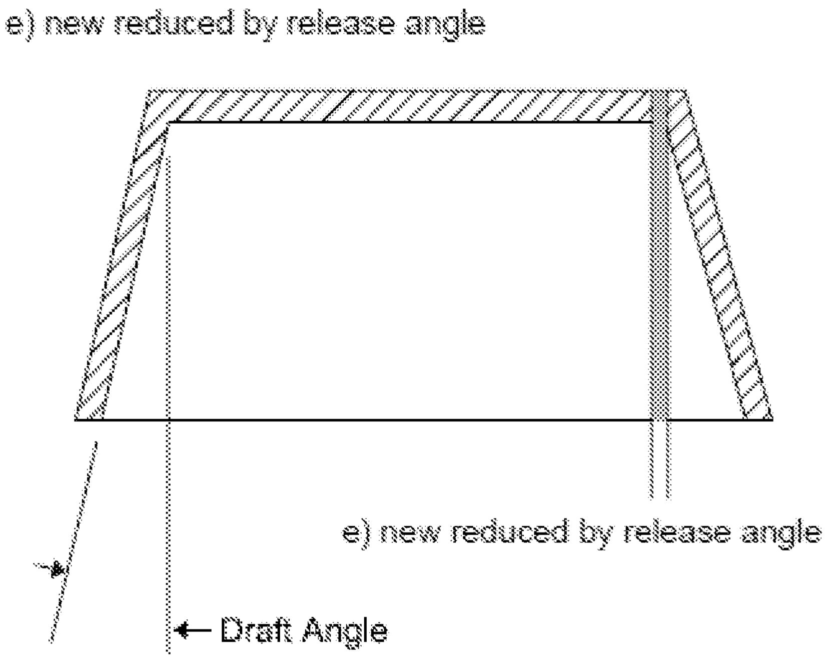
e) new reduced by release angle
e) new reduced by release angle
Draft Angle

Fig. 3

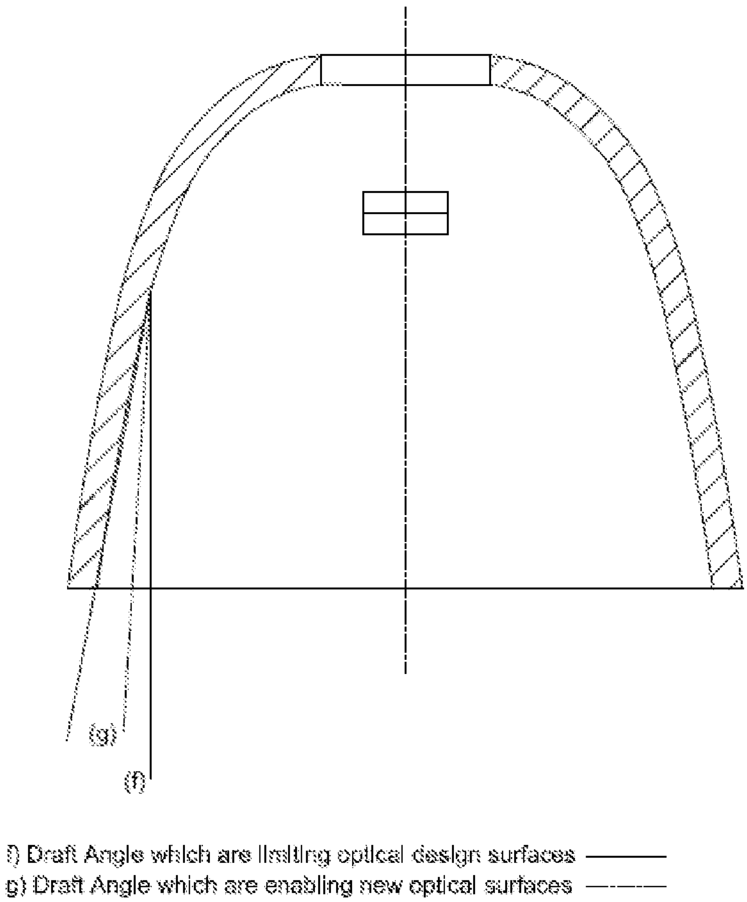
(g)
(f)
f) Draft Angle which are limiting optical design surfaces
g) Draft Angle which are enabling new optical surfaces

Fig. 4

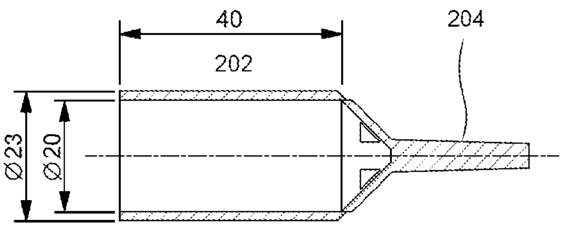
40
202
204
Ø23
Ø20

Fig. 5

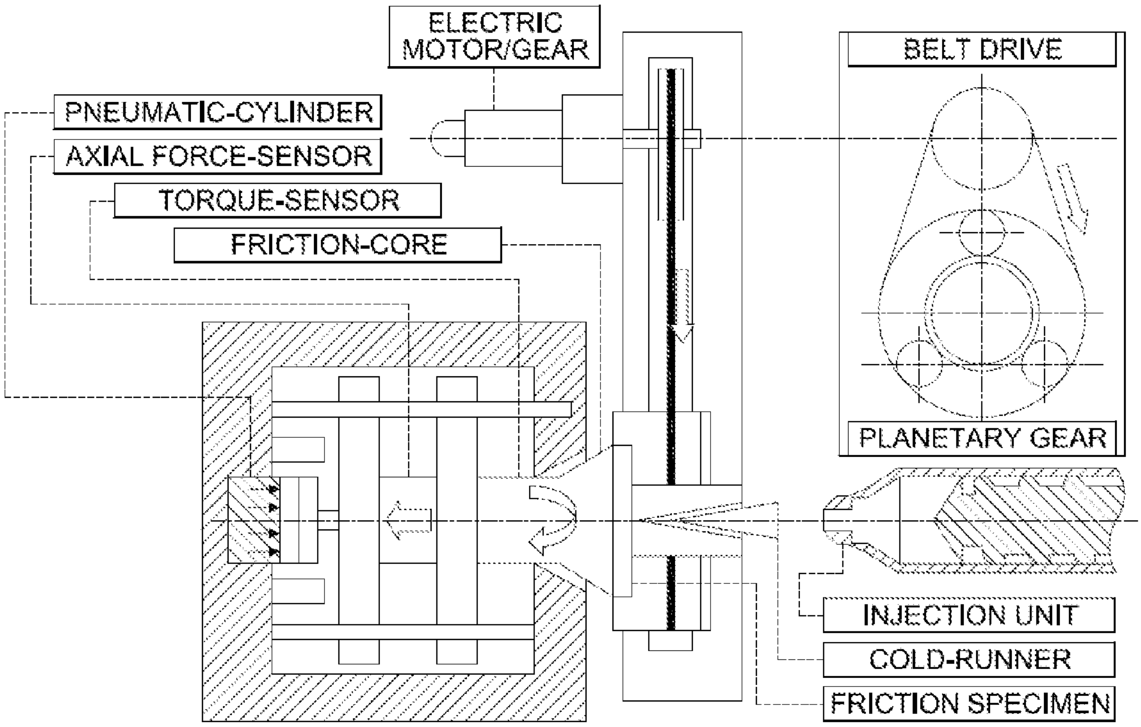
ELECTRIC MOTOR/GEAR
BELT DRIVE
PNEUMATIC-CYLINDER
AXIAL FORCE-SENSOR
TORQUE-SENSOR
FRICTION-CORE
PLANETARY GEAR
INJECTION UNIT
COLD-RUNNER
FRICTION SPECIMEN

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014191973 A1
- US 2013309474 A1
- US 7786246 B
- EP 1757634 A